(19) Europäisches Patentamt
European Patent Office
Office européen des brevets

(11) **EP 2 801 102 B1**

(12) **EUROPEAN PATENT SPECIFICATION**

(45) Date of publication and mention
of the grant of the patent:
**30.05.2018 Bulletin 2018/22**

(51) Int Cl.:
*H01J 1/02* (2006.01)     *H01J 45/00* (2006.01)
*H01J 3/02* (2006.01)

(21) Application number: **12863524.0**

(22) Date of filing: **27.12.2012**

(86) International application number:
**PCT/US2012/071849**

(87) International publication number:
**WO 2013/101951 (04.07.2013 Gazette 2013/27)**

(54) **ANODE WITH SUPPRESSOR GRID**

ANODE MIT UNTERDRÜCKUNGSGITTER

ANODE DOTÉE D'UNE GRILLE DE SUPPRESSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2011 US 201161631270 P
30.12.2011 US 201113374545
26.04.2012 US 201261638986 P
10.07.2012 US 201213545504
16.08.2012 US 201213587762
12.09.2012 US 201213612129
01.11.2012 US 201213666759**

(43) Date of publication of application:
**12.11.2014 Bulletin 2014/46**

(73) Proprietor: **Elwha LLC
Bellevue, WA 98005-4046 (US)**

(72) Inventors:
• **CHEATHAM, Jesse R., III
Seattle, Washington 98104 (US)**
• **ECKHOFF, Philip Andrew
Bellevue, Washington 98004 (US)**
• **GATES, William
Redmond, Washington 98052-6399 (US)**
• **HYDE, Roderick, A.
Redmond, Washington 98052 (US)**
• **ISHIKAWA, Muriel Y.,
Livermore, California 94550-4921 (US)**
• **KARE, Jordin T.
Seattle, Washington 98112 (US)**
• **MYHRVOLD, Nathan P.,
Bellevue, Washington 98004 (US)**
• **PAN, Tony S.,
Cambridge, Massachusetts 02138 (US)**
• **PETROSKI, Robert C.
Seattle, Washington 98112 (US)**
• **TEGREENE, Clarence T.
Mercer Island, Washington 98040 (US)**
• **TUCKERMAN, David B.
Lafayette, California 94549 (US)**
• **WHITMER, Charles
North Bend, Washington 98045 (US)**
• **WOOD, Lowell L.
Bellevue, Washington 98004 (US)**
• **WOOD, Victoria Y. H.
Livermore, California 94550-4921 (US)**

(74) Representative: **D Young & Co LLP
120 Holborn
London EC1N 2DY (GB)**

(56) References cited:
EP-A2- 1 063 197        WO-A1-2014/019594
US-A- 2 798 963         US-A- 3 254 244
US-A- 4 427 886         US-A- 5 371 371
US-A- 5 386 172         US-A- 5 548 138
US-A- 5 834 781         US-A- 5 838 096
US-A- 5 936 348         US-A1- 2004 118 347
US-A1- 2007 158 588     US-A1- 2009 115 305
US-A1- 2010 019 648     US-A1- 2010 026 160
US-A1- 2010 108 882     US-B1- 6 404 089
US-B1- 6 632 113

EP 2 801 102 B1

- Dominick Lovicott: "Electron Emission Thermal Energy Conversion", , 1 July 2010 (2010-07-01), XP055061237, Missouri, Columbia, US Retrieved from the Internet: URL:https://mospace.umsystem.edu/xmlui/bit stream/handle/10355/9264/research.pdf?sequ ence=3 [retrieved on 2013-04-26]

- Cyril Stephanos: "Thermoelectronic Power Generation from Solar Radiation and Heat", , 17 December 2012 (2012-12-17), XP055061200, Augsburg Retrieved from the Internet: URL:http://opus.bibliothek.uni-augsburg.de /opus4/files/2253/Dissertation_Stephanos.p df [retrieved on 2013-04-25]

**Description**

**BACKGROUND**

US 3254244 discloses thermionic power conversion devices, more particularly thermionic power conversion devices employing a plasma for space charge neutralization. The object is to provide a thermionic power conversion device wherein greater variety in the selection of a gas for space charge neutralization is possible.

US 2009/115305 discloses vacuum microelectronic devices with carbon nanotube films, layers, ribbons and fabrics, in particular microelectronic vacuum devices including triode structures that include three-terminals (an emitter, a grid and an anode), and also higher-order devices such as tetrodes and pentodes, all of which use carbon nanotubes to form various components of the devices

**SUMMARY**

The subject matter claimed herein is set out in the claims.

In one embodiment, a method comprises: applying a suppressor electric field to a suppressor region between a suppressor and an anode, wherein the suppressor electric field is selected to provide a force on an electron in a direction pointing away from the anode in the suppressor region; passing a first set of electrons through the suppressor region and to the anode, in a direction opposite the force; and interacting at least a portion of the first set of electrons with the anode.

In another embodiment, an apparatus comprises: an anode receptive to a first set of electrons; and a suppressor positioned proximate to the anode and receptive to a power source to produce a suppressor electric field selected to provide a force on an electron in a direction pointing away from the anode, wherein the suppressor electric field is further selected to pass the first set of electrons to the anode.

In another example, an electron multiplier comprises: an array of anodes, each anode in the array of anodes being receptive to electrons to produce secondary electrons; and at least one suppressor positioned proximate to at least one anode in the array of anodes, the at least one suppressor being receptive to a power source to produce a suppressor electric field selected to provide a force on an electron in a direction pointing away from the at least one anode, wherein the suppressor electric field is further selected to pass electrons to the at least one anode.

In another example, a thermionic converter comprises: a cathode configured to produce a first set of electrons; an anode receptive to a first portion of the first set of electrons to produce a current; and a suppressor positioned proximate to the anode and receptive to a power source to produce a suppressor electric field selected to provide a force on the first set of electrons in a direction pointing away from the anode in a region located between the suppressor and the anode, wherein the suppressor electric field is further selected to pass the first portion of the first set of electrons.

The foregoing summary is illustrative only and is not intended to be in any way limiting. In addition to the illustrative aspects, embodiments, and features described above, further aspects, embodiments, and features will become apparent by reference to the drawings and the following detailed description.

**BRIEF DESCRIPTION OF THE FIGURES**

**FIG. 1**    is a schematic of an apparatus comprising a cathode, a gate, a suppressor and an anode.
**FIG. 2**    is a schematic of energy levels corresponding to an embodiment of the apparatus of FIG. 1.
**FIG. 3**    is a schematic of an apparatus comprising a cathode, a gate, a suppressor, an anode, and a screen grid.
**FIG. 4**    is a schematic of an apparatus comprising a cathode, a gate, a suppressor, an anode, and circuitry.
**FIGS. 5-6**    are flow charts depicting methods.
**FIGS. 7-8**    are graphs of thermodynamic efficiency versus power for a heat engine.
**FIG. 9**    is a schematic of a portion of a field emission device including a thin film.
**FIG. 10**    is a schematic of a field emission device having a cathode and anode that form a substantially interlocking structure.
**FIG. 11**    is a schematic of a field emission device having a substantially tubular cathode and anode.
**FIG. 12**    is a schematic of a field emission device, wherein the anode includes a thin coating.
**FIG. 13**    is a schematic of a field emission device having a gate and suppressor that are fabricated on a first substrate, and having a cathode and anode that are fabricated on a second substrate.
**FIG. 14**    is a schematic of a field emission device having a cathode, anode, and a gate/suppressor.
**FIG. 15**    is a schematic of the potential corresponding to the schematic of **FIG.** 14.
**FIG. 16**    is a schematic of a back-gated field emission device.

**FIG. 17**      is a schematic of electromagnetic energy incident on a field emission device.
**FIG. 18**      is a schematic of an anode and a suppressor with an electric field.

The use of the same symbols in different drawings typically indicates similar or identical items.

## DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the scope of the subject matter presented here.

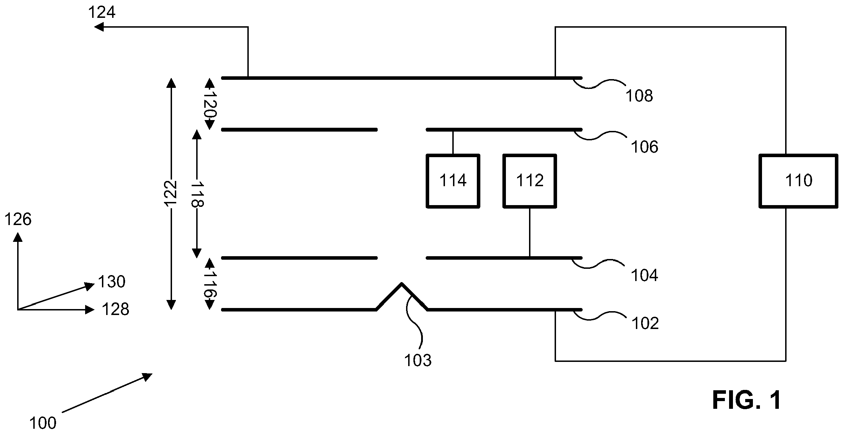

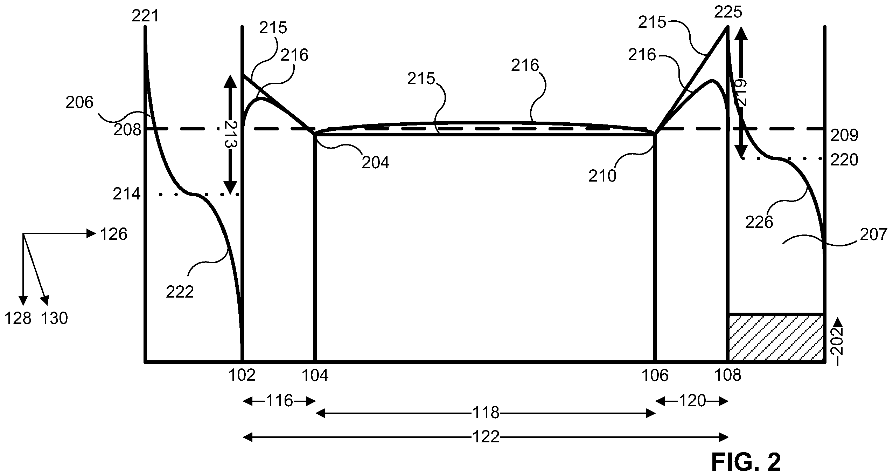

In one embodiment, shown in FIG. 1, an apparatus 100 comprises a cathode 102, an anode 108 arranged substantially parallel to the cathode 102, wherein the anode 108 and cathode 102 are receptive to a first power source 110 to produce an anode electric potential 202 higher than a cathode electric potential. It is the convention in this discussion to generally reference electric potentials relative to the value of the cathode electric potential, which in such circumstances can be treated as zero. The anode electric potential 202 and other electric potentials corresponding to the apparatus of FIG. 1 are shown in FIG. 2 for an embodiment of FIG. 1 corresponding to a heat engine. The apparatus 100 further comprises a gate 104 positioned between the anode 108 and the cathode 102, the gate 104 being receptive to a second power source 112 to produce a gate electric potential 204, wherein the gate electric potential 204 is selected to induce electron emission from the cathode 102 for a first set of electrons 206 having energies above a first threshold energy 208. The apparatus 100 further comprises a suppressor 106 positioned between the gate 104 and the anode 108, the suppressor 106 being receptive to a third power source 114 to produce a suppressor electric potential 210 selected to block electron emission from the anode 108 for a second set of electrons 207 having energies below a second threshold energy 209 while passing at least a portion of the first set of electrons 206. In this embodiment the anode 108 is positioned to receive the passed portion of the first set of electrons 206. In some embodiments the anode output 124 may be electrically connected to power a device.

Although conventionally a cathode is considered an electron emitter and an anode is an electron receiver, in the embodiments presented herein, the cathode and anode generally both emit and receive electrons. The net current and heat flow in the embodiments described herein may be determined by the temperatures of the cathode 102 and the anode 108, the anode electric potential 202, and the gate and suppressor electric potentials 204, 210. In some embodiments described herein, such as an electricity producing heat engine that moves heat from a higher temperature to a lower temperature, net electron flow and heat flow is from the cathode 102 to the anode 108, and in other embodiments described herein, such as an electricity consuming heat engine that moves heat from a lower temperature to a higher temperature, net electron flow and heat flow is from the anode 108 to the cathode 102. Further, in the embodiments presented herein, both the cathode 102 and the anode 108 are electron emitters, and either or both of the cathode 102 and/or the anode 108 may include field emission enhancement features 103.

FIG. 1 shows the cathode 102 having a field emission enhancement feature 103, however in some embodiments the cathode may be substantially flat and may not include the field emission enhancement feature 103. In some embodiments including one or more field emission enhancement features 103, the field emission enhancement features 103 may include a geometric tip and/or a carbon nanotube.

The apparatus 100 includes at least one region including gas through which at least a first portion of the first set of electrons 206 pass. Normally, the region between the cathode 102 and anode 108 is a gas-filled region (or, spacer region) through which at least a portion of the first set of electrons 206 passes. The gas may be comprised of at least one atomic or molecular species, partially ionized plasma, fully ionized plasma, or mixtures thereof. The gas composition and density may be chosen to be conducive to the passage of electrons. The gas density may be below atmospheric density, and may be sufficiently low as to be effectively a vacuum. This region may, in some embodiments, be air or its equivalent, wherein the pressure of the region may or may not be adjusted.

The resulting potential 215 as a function of distance from the cathode in the x-direction 126 in the apparatus 100 is shown in FIG. 2 for an embodiment of FIG. 1 corresponding to a heat engine. The potential 215 does not take into account the space charge electric potential due to the emitted electrons between the cathode and anode. It also does not take into account the image charge electric potential due to image charge effects of a flat plate (i.e., the cathode and anode). The net electric potential 216 experienced by the electrons between the cathode and anode is a function of all of the electric potentials acting on the electrons, including the space charge electric potential and the image charge electric potential. Further, electric potentials such as those shown in FIG. 2 are defined herein for negatively-charged electrons, instead of the Franklin-conventional positive test charges, such that electrons gain kinetic energy when moving from high to low potential.

In the above description and the remainder of the description, it is to be understood that electrons obey the laws of quantum mechanics and therefore, given a potential barrier such as that formed between the cathode and gate (i.e., the portion of the potential 216 that is between the cathode and gate), electrons having energies between the bottom and top of the potential barrier have some probability of tunneling through the barrier. For example, some electrons having energies above the threshold energy 208 may not be emitted from the cathode 102. Further, for the first set of electrons 206 that is emitted from the cathode, there is some probability, based on their energy and the suppressor electric potential 210, that they will tunnel through the potential barrier that is formed between the suppressor and the anode (i.e., the portion of the potential 216 that is between the suppressor and the anode).

Although the first, second and third power sources 110, 112 and 114 are shown in FIG. 1 as being different, in some embodiments the power sources 110, 112 and 114 may be included in the same unit. There are many different ways that the power sources 110, 112 and 114 may be configured relative to the elements 102, 104, 106 and 108, and one skilled in the art may determine the configuration depending on the application.

Also shown in FIG. 2, on the left and right sides of the graph of the potentials 215, 216, are graphs of the Fermi-Dirac distributions $F(E, T)$ for the electrons in the cathode 102 and the anode 108.

On the left side is a graph of the Fermi-Dirac distribution corresponding to the cathode $F_c(E_c, T_c)$ (222) as a function of electron energy $E_c$ (221). Also shown is the cathode Fermi energy $\mu_c$ (214) and the cathode work function $\varphi_c$ (213).

On the right side is a graph of the Fermi-Dirac distribution corresponding to the anode $F_a(E_a, T_a)$ (226) as a function of electron energy $E_a$ (225). Also shown is the anode Fermi energy $\mu_a$ (220) and the anode work function $\varphi_a$ (219).

Electrons in a reservoir (e.g., the cathode 102 and anode 108) obey the Fermi-Dirac distribution:

$$F(E,T) = \frac{1}{1 + e^{(E-\mu)/kT}}$$

where $\mu$ is the Fermi energy, k is the Boltzmann constant, and T is the temperature. The energy where the Fermi occupation of the cathode $F_c(E_c, T_c)$ equals the Fermi occupation of the anode $F_a(E_a, T_a)$ is the Carnot-efficiency energy $E_{carnot}$:

$$E_{carnot} = \frac{\mu_a T_c - \mu_c T_a}{T_c - T_a}$$

where $\mu_c$ is the cathode Fermi energy 214 and $\mu_a$ is the anode Fermi energy 220 shown in FIG. 2, measured from the bottom of the conduction band of the cathode 102, and $T_c$ is the cathode temperature and $T_a$ is the anode temperature.

In cases where the cathode 102 and anode 108 are the same material, the Carnot-efficiency energy $E_{carnot}$ is the energy at which the Fermi occupation of the cathode 102 and the anode 108 are equal, and theoretically electron flow between the two occurs without change in entropy. Absent potential barrier 216, at any given electron energy above $E_{carnot}$ there are more electrons in the hotter plate, so the net flow of electrons at these energies go from hot plate to cold plate. Conversely, at any given electron energy below $E_{carnot}$ there are more electrons in the colder plate, so the net flow of electrons at these energies go from cold plate to hot plate.

In the embodiment of FIG. 1 corresponding to a heat engine, the cathode 102 is hotter than the anode 108 $(T_c > T_a)$ and the anode 108 is biased above the cathode 102 as shown in FIG. 2. In this embodiment, $\mu_a = \mu_c + V_0$, where $V_0$ is the anode electric potential 202. Then the Carnot-efficiency energy is equal to:

$$E_{carnot} = \mu_c + \frac{V_0}{\eta_{carnot}}$$

where

$$\eta_{carnot} = \frac{T_c - T_a}{T_c}$$

is the Carnot efficiency. Due to the potential bias $V_0$, every electron going from the cathode 102 to the anode 108 gains useful potential energy $V_0$ that can be used to do work, and every electron going from the anode 108 to the cathode 102 expends potential energy $V_0$ to transport heat instead.

Without potential barriers (such as the gate 104 and/or the suppressor 106), at any given electron energy below $E_{carnot}$ the net flow of electrons go from the anode 108 to the cathode 102, expending potential energy $V_0$ per electron

to transport heat. Therefore, in an embodiment where the apparatus is an electricity-producing heat engine, the electrons from the anode having energies less than $E_{carnot}$ are blocked by the suppressor 106, reducing the loss of thermodynamic efficiency.

An electron at energy $E_{carnot}$ takes away $E_{carnot}$ from the hot cathode 102 upon emission, and is replaced by an electron with average energy $\mu_c$, so the net heat loss due to the emission of this electron at the hot plate is $V_0/\eta_{carnot}$. Thus, the ratio of useful-energy-gained to heat-loss is $\eta_{carnot}$, and we conclude that emitted electrons of energy $E_{carnot}$ are Carnot efficient, hence the name.

Because the first set of electrons 206 has momentum in the y- and z- directions (128, 130) as well as in the x-direction (126), in an embodiment in which electron flow from the cathode 102 below the Carnot-efficiency energy $E_{carnot}$ is blocked, the gate electric potential $E_g$ (204) is slightly below the Carnot-efficiency energy $E_{carnot}$:

$$E_g \approx E_{carnot} - kT_c$$

or,

$$E_g \approx \frac{\mu_a T_c - \mu_c T_a}{T_c - T_a} - kT_c$$

where $kT_c$ represents the average energy of the electrons in the y- and z- directions (128, 130) combined. The suppressor electric potential $E_s$ (210) may be selected to be the same as the gate electric potential $E_g$ (204).

In some embodiments, the gate electric potential 204 and the suppressor electric potential 210 may have other values. For example, one or both of the gate and/or suppressor electric potentials 204, 210 may be lower than previously described. In one embodiment, the apparatus is configured such that the peak of the portion of the potential 216 that is between the cathode 102 and the gate 104 is around the Carnot-efficiency energy $E_{carnot}$, and/or the peak of the portion of the potential 216 that is between the suppressor 106 and the anode 108 is around the Carnot-efficiency energy $E_{carnot}$. In such an embodiment the efficiency of the apparatus may be different from previously described. These are just a few examples of potentials that may be applied to the gate 104 and/or the suppressor 106, and the actual potentials at the gate 104 and suppressor 106 may depend on the particular application and the selected energy ranges of electron emission to be screened from the cathode 102 and the anode 108. While in general, the sign of net electron-carried heat flow matches that of the net electron current flow, for some embodiments the different energy weighting of different portions of the electron distribution may result in opposite net flow of electron-carried heat and electron current.

The separations between the different elements 102, 104, 106 and 108 depend on the particular embodiment. For example, in some embodiments the apparatus 100 is a nanoscale device. In this embodiment, the cathode 102 and anode 108 may be separated by a distance 122 that is 10-1000 nm, the cathode 102 and gate 104 may be separated by a distance 116 that is 1-100 nm, and the anode 108 and the suppressor 106 may be separated by a distance 120 that is 1-100 nm. These ranges are exemplary embodiments and not meant to be limiting. In the case where the apparatus 100 is a nanoscale device, the lower limit of distances 116, 118, 120, and/or 122 may be at least partially determined by fabrication technology that is evolving. To illustrate existing technology for producing small separations, cathode-gate and suppressor-anode separations 116, 120 on the order of 1 nm may be achieved by depositing a nm scale dielectric layer on the cathode 102 and/or anode 108 and depositing the gate 104 and/or suppressor 106 on the dielectric layer. Further, in cases where the cathode 102 includes one or more field emission enhancement features 103, the cathode-gate separation 116 may be at least partially determined by the length of the feature 103 in the x-direction 126. For example, if the length of the feature 103 in the x-direction 126 was 5 nm, the cathode-gate separation 116 would be at least 5 nm.

In other embodiments the apparatus is larger than nanoscale, and exemplary separation distances 116, 118, 120, and/or 122 may range between the nanometer to millimeter scale. However, this scale is again exemplary and not limiting, and the length scales 116, 118, 120, 122 may be selected at least partially based on operating parameters of other gridded electron emitting devices such as vacuum tubes.

The cathode and anode work functions 213, 219 are determined by the material of the cathode 102 and anode 108 and may be selected to be as small as possible. The cathode and anode may comprise different materials. One or both materials can include metal and/or semiconductor, and the material(s) of the cathode 102 and/or anode 108 may have an asymmetric Fermi surface having a preferred Fermi surface orientation relative to the cathode or anode surface. An oriented asymmetric Fermi surface may be useful in increasing the fraction of electrons emitted normally to the surface and in decreasing the electron's transverse momentum and associated energy. In some embodiments, it is useful to reduce the electron current emitted from one of the surfaces (such as reducing anode emission current in an electricity producing heat engine, or reducing cathode emission current in an electricity consuming heat engine). This reduction may utilize an asymmetric Fermi surface which reduces momentum components normal to the surface. This reduction may involve minimization of the material's density of states (such as the bandgap of a semiconductor) at selected electron energies involved in the device operation.

Although the embodiments described with respect to FIG. 2 correspond to a heat engine, the device as shown in FIG. 1 may be configured, for example, as a heat pump or a refrigerator. In an embodiment where the apparatus of FIG. 1 is configured as a heat pump, the bias $V_0$ is applied to the cathode 102 instead of to the anode 108 as shown in FIG. 2. In an embodiment where the apparatus of FIG. 1 is configured as a refrigerator to cool the anode 108, the bias $V_0$ (202) is applied to the anode and the suppressor electric potential 210 and gate electric potential 204 may be chosen to be substantially below the Carnot-efficiency energy $E_{carnot}$. In this case, net current flow and heat transport is from the anode to the cathode..

In some embodiments the apparatus 100 further includes a screen grid 302 positioned between the gate 104 and the suppressor 106, the screen grid 302 being receptive to a fourth power source 304 to produce a screen grid electric potential. The screen grid electric potential can be chosen to vary the electric potential 216 between the gate 104 and the suppressor 106, and to accelerate electrons to another spatial region and thus reduce the effects of the space charge electric potential on the field emission regions of the cathode and/or anode.

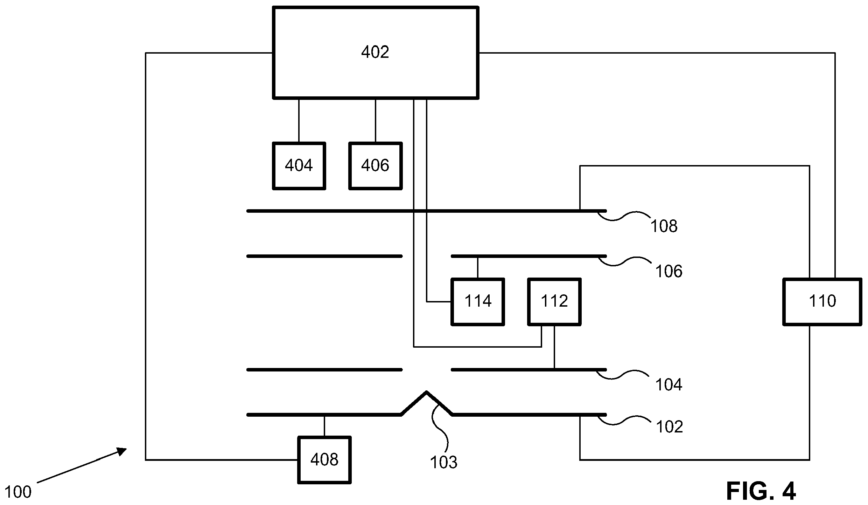

In an embodiment shown in FIG. 4, the apparatus 100 further comprises circuitry 402 operably connected to at least one of the first, second and third power sources 110, 112 and 114 to vary at least one of the anode, gate and suppressor electric potentials 202, 204 and 210. The circuitry 402 may be receptive to signals to determine a relative power output and/or thermodynamic efficiency of the apparatus 100 and to dynamically vary at least one of the first, gate and suppressor electric potentials 202, 204, 210 responsive to the determined relative power output and/or thermodynamic efficiency. The apparatus 100 further comprises a meter 404 configured to measure a current at the anode 108, and wherein the circuitry 402 is responsive to the measured current to vary at least one of the first, gate and suppressor electric potentials 202, 204 and 210. The apparatus 100 may further comprise a meter 406 configured to measure a temperature at the anode 108, and wherein the circuitry 402 is responsive to the measured temperature to vary at least one of the anode, gate and suppressor electric potentials 202, 204 and 210. The apparatus 100 may further comprise a meter 408 configured to measure a temperature at the cathode 102, and wherein the circuitry 402 is responsive to the measured temperature to vary at least one of the anode, gate and suppressor electric potentials 202, 204 and 210.

In some embodiments the circuitry 402 may be configured to iteratively determine optimal anode, gate, and suppressor electric potentials 202, 204, 210. For example, the circuitry 402 may be operably connected to the meter 404 configured to measure a current at the anode 108, and may iteratively change one of the anode, gate, and suppressor potentials to maximize the current at the anode.

Further, the circuitry 402 may be configured to iteratively determine optimal cathode 102 and anode 108 temperatures. For example, as described above relative to electric potentials, the circuitry 402 may be operably connected to the meter 404 configured to measure a current at the anode 108, and may iteratively change one of the cathode 102 and anode 108 temperatures to maximize the current at the anode B108.

In some embodiments the gate and suppressor electric potentials 204, 210 may be varied as a function of time. For example, the gate electric potential 204 may be switched on to release the first set of electrons 206 from the anode, and switched off once the first set of electrons 206 has passed through the gate 104. The suppressor electric potential 210 may be switched on to accelerate the first set of electrons 206 towards the anode 108, and switched off once the first set of electrons 206 has passed through the suppressor 106. Such an embodiment assumes high switching speeds. In some embodiments, switching such as that described above occurs cyclically and responsive to the circuitry 402.

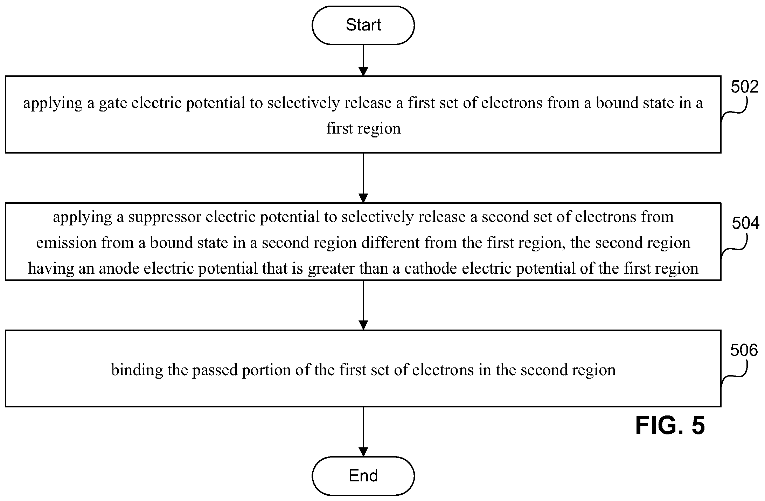

In one embodiment, depicted in the Flow Chart of FIG. 5, a method comprises: (502) applying a gate electric potential 204 to selectively release a first set of electrons 206 from a bound state in a first region (where in one embodiment the first region corresponds to the cathode 102); (504) applying a suppressor electric potential 210 to selectively release a second set of electrons from emission from a bound state in a second region different from the first region, the second region having an anode electric potential that is greater than a cathode electric potential of the first region (where in one embodiment the second region corresponds to the anode 108), the second region having an anode electric potential 202 that is greater than a cathode electric potential of the first region; and (506) passing a portion of the first set of electrons 206 through a gas-filled region and binding the passed portion of the first set of electrons 206 in the second region.

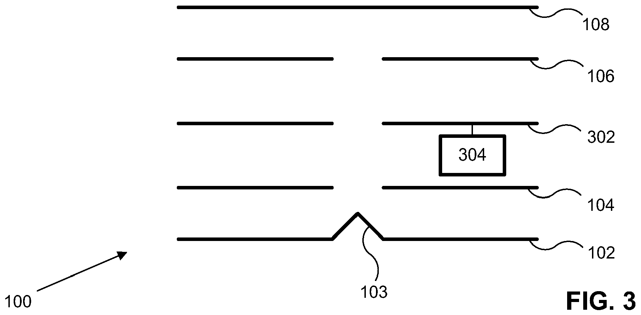

Various methods have been described herein with respect to FIGS. 1-4 and may apply to the methods depicted in the flow chart of FIG. 5. For example, methods related to the circuitry 402 and another apparatus shown in FIG. 4 apply to the method of FIG. 5, where the first region includes at least a portion of the cathode 102 and the second region includes at least a portion of the anode 108.

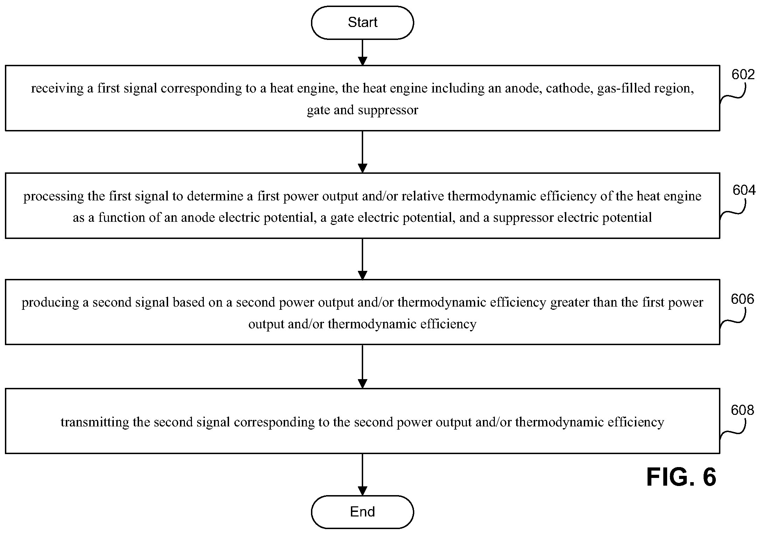

In one example, depicted in the flow chart of FIG. 6, a method comprises (602) receiving a first signal corresponding to a heat engine, the heat engine including an anode, cathode, gas-filled region, gate and suppressor; (604) processing the first signal to determine a first power output and/or relative thermodynamic efficiency of the heat engine as a function of an anode electric potential, a gate electric potential, and a suppressor electric potential; (606) producing a second signal based on a second power output and/or thermodynamic efficiency greater than the first power output and/or thermodynamic efficiency; and (608) transmitting the second signal corresponding to the second power output and/or thermodynamic efficiency.

The method of FIG. 6 is applicable, for example, in an example where a device as shown in FIG. 1 is received and the optimal parameters for a heat engine must be determined.

In one example the first signal includes a user input including known dimensions, materials, and temperatures of the cathode and anode. In this example, the known parameters may be used to calculate the optimal electric potentials applied to the anode 108, gate 104, and suppressor 106.

In another example the first signal includes a measured parameter such as a current at the anode 108, where the electric potentials are varied to optimize the current at the anode. Such a scenario has been described with respect to the circuitry 402 shown in FIG. 4.

In one example, producing the second signal may further include determining a change in at least one of the anode, gate and suppressor potentials, and the method may further comprise varying at least one of the anode, gate, and suppressor potentials in response to the determined change.

In another example, producing the second signal may further include determining a change in at least one of a cathode and an anode temperature, and the method may further comprise varying at least one of the cathode and anode temperatures in response to the determined change.

In one example, the anode, cathode, gate, and suppressor are separated by cathode-gate, gate-suppressor, and suppressor-anode separations, and producing the second signal may include determining a change in at least one of the cathode-gate, gate-suppressor, and suppressor-anode separations, and the method may further comprise varying at least one of the cathode-gate, gate-suppressor, and suppressor-anode separations in response to the determined change. For example, one or more of the cathode-gate, gate-suppressor, and suppressor-anode separations (116, 118, 120) may be variable (such as where one or more of the cathode 102, gate 104, suppressor 106, and anode 108 are mounted on a MEMS) and may be varied to optimize the efficiency of the device.

In one example the received first signal corresponds to an anode current, and processing the first signal to determine a first relative thermodynamic efficiency of the heat engine as a function of an anode electric potential, a gate electric potential, and a suppressor electric potential includes determining the relative thermodynamic efficiency based on the anode current.

The "relative power output" and/or "relative thermodynamic efficiency" may be an actual power output and/or thermodynamic efficiency or it may be a quantity that is indicative of the power output and/or thermodynamic efficiency, such as the current at the anode. The relative power output and relative thermodynamic efficiency represent performance characteristics of the heat engine.

The following presents a calculation of the thermodynamic efficiency of a heat engine as described previously, and corresponding to the potentials of Figure 2. Again, $T_c$ and $T_a$ are the temperatures of the cathode and anode, $\mu_c$ (214) and $\mu_a$ (220) are the Fermi levels of the cathode and anode (where, for simplicity, we take $\mu_c = 0$, and $\mu_a = \mu_c + V_0 = V_0$); and $\varphi_c$ (213) and $\varphi_a$ (219) are the work functions of the cathode and anode, where we assume that the cathode and anode are made from the same materials, so we set $\varphi_c = \varphi_a = \varphi$.

In this one-dimensional model, the potential barrier (216) that is created between the cathode and anode only filters electrons with respect to their momentum in the x-direction (126), not with respect to their total momentum. Assuming ballistic, energy-conserving transport across the barrier (216), the current density $J(W)$ as a function of energy W in the x-direction (126) is:

$$J(W)dW = eN(W)D(W)dW$$

Here, e is the electron charge. $W$ is the electron energy associated with the component of momentum in the x-direction (126), which we will call the normal energy, and is defined by:

$$W = \frac{p_x^{\,2}}{2m} + V(x)$$

Where $p_x$ is the electron momentum in the x-direction (126), and $V(x)$ is the net electric potential 216.

$D(W)$ is the transmission function and represents the probability that an electron inside the emitter (for the heat engine, both the cathode and anode are emitters) with normal energy W either crosses over or tunnels through the energy barriers defined by the net electric potential (216).

The Wentzel-Kramers-Brillouin (WKB) approximation of the tunneling transmission coefficient is given by:

$$D(W) = e^{-\int_{x_1}^{x_2} \sqrt{\frac{8m}{\hbar^2}|V(x)-W|}\,dx}$$

Here, $V(x)$ is the net electric potential (216), $x_1$ and $x_2$ are the roots of $V(x)-W = 0$, $m$ is the mass of an electron, and $\hbar$ is Planck's constant $h$ divided by $2\pi$ ($\hbar = h/2\pi$).

The potential of a single field emission barrier (e.g., one of the peaks of the net electric potential (216) forms a single field emission barrier) is of the form:

$$V_{SB}(x) = \varphi - eFx - \frac{e^2}{4\pi\varepsilon_0}\frac{1}{4x}$$

Here, $\varphi$ is the work function (again, here we choose the same material for the anode and cathode, so $\varphi_c = \varphi_a = \varphi$), $x$ is absolute value of the component of the distance from the emitter that is along the x-direction 216 (for the barrier between the cathode and gate, this is the distance from the cathode; for the barrier between the anode and suppressor, this is the distance from the anode), F is the effective electric field at the emitter ($F = \beta F_i$, where $\beta$ is the field enhancement factor due to the shape of the emitter and $F_i$ is the field without enhancement), and $\varepsilon_0$ is the permittivity of free space. The last term in the above equation for $V_{SB}(x)$ is the potential due to image charge effects of a flat plate, which lowers the peak of the potential barrier. This is known as the Schottky effect, which can lower the barrier peak (i.e., the peak of the potential (216)) by as much as a few tenths of an eV for applied fields on the order of 1 V/nm. Note that in our system, we have two of these barriers, one between the cathode 102 and gate 104, and the other between the suppressor (106) and anode (108).

Including the image potential, the tunneling transmission coefficient $D_{SB}(W)$ for a single rounded barrier (like one of the barriers formed by potential (216)) is given by:

$$D_{SB}(W) = e^{-\left(\frac{b(\varphi-W)^{3/2}}{F}\right)v(f)}$$

Where:

$$b = \frac{4\sqrt{2m}}{3\hbar e} \approx 6.830890 \text{ in } \mathrm{eV}^{-3/2}(\mathrm{Vnm}^{-1})$$

$$v(f) \approx 1 - f + \tfrac{1}{6} f \ln f$$

$$f = \frac{e^3}{4\pi\varepsilon_0}\frac{F}{(\varphi-W)^2} \approx 1.439964\frac{F}{(\varphi-W)^2} \text{ in } \mathrm{eV}^2(\mathrm{nm/V})$$

The equation above for $D_{SB}(W)$ for a single rounded barrier is only valid when the WKB approximation is valid, that is, when W is well below the peak of the barrier. Moreover, that equation gives nonsensical values for $f > 1$, or equivalently, when:

$$W > \varphi - \sqrt{\frac{e^3 F}{4\pi\varepsilon_0}}$$

That is, when W exceeds the peak of the barrier. For electrons that have sufficient energy to pass over the barrier, classically, it might seem reasonable to take the transmission coefficient to be unity. Therefore, we can use:

$$D_{SB}(W) \approx e^{-b\frac{(\varphi-W)^{3/2}}{F}v(f)} \qquad \text{for } f < 1$$

$$D_{SB}(W) \approx 1 \qquad \text{for } f \geq 1$$

This is not exact, since for electrons with energies above a barrier's peak there is still a non-zero probability for the approaching electron wave to be reflected back from it. However, the above expression for $D_{SB}(W)$ provides a good approximation. More accurate values for $D_{SB}(W)$ can be found using numerical methods such as the transfer matrix method, and/or using more accurate models of the potential barrier that takes into account the geometry of the emitter.

$N(W)dW$ is the electron supply function and describes the number of electrons incident on the emitter surface per second per unit area with normal energy inside the interval defined by $W$ and $W+dW$. For a metal, this is:

$$N(W)dW = \frac{4\pi mkT}{h^3}\log\left[1 + e^{-\frac{(W-\mu)}{kT}}\right]dW$$

(For semiconductors and other materials, the supply function can be calculated from their band structures and density of states.)

Denoting the supply function of the hot cathode and cold anode as $N^c$ and $N^a$, the differential net current density from the cathode to the anode is:

$$J_{net}(W)dW = e[N^c(W) - N^a(W)]D(W)dW$$

Here, $D(W)$ is the tunneling transmission coefficient that takes into account both barriers formed by the net electric potential 216. Denoting the barrier between the cathode and gate as $D_{SBc}(W)$ and the barrier between the anode and suppressor as $D_{SBa}(W)$, and taking reflections into account, $D(W)$ is given by:

$$D(W) = \frac{D_{SBc}(W)D_{SBa}(W)}{D_{SBc}(W) + D_{SBa}(W) - D_{SBc}(W)D_{SBa}(W)}$$

Not including reflections, $D(W)$ is approximately:

$$D(W) \approx D_{SBc}(W)D_{SBa}(W)$$

The total net current density J would then be:

$$J_{net} = \int J_{net}(W)dW$$

And the power (the terms "power" and "power output" are used interchangeably herein) is:

$$P = J_{net}V_0$$

The above calculations do not take into account the space charge potential built by the electrons traversing between the cathode and anode. Below is an example method for estimating this space charge potential and its effects.

If the gate (104) and suppressor (106) are set at the same potential bias $V_{grid}$, it is reasonable to assume that the electrons are uniformly distributed in the cathode-anode gap, with constant space charge density $\rho$. In this case, the space charge potential will be shaped like a parabola (and therefore, the portion of (216) between the gate (104) and the suppressor (106) will be a parabola), with its peak in the middle of the gap between the cathode (102) and anode (202), and a peak height $\Delta W_{sc}$ that is offset from $V_{grid}$ by:

$$\Delta W_{sc} = \frac{e\rho}{2\varepsilon_0}\frac{d^2}{4}$$

Here d is the distance between the cathode and anode. Electrons with energies lower than this peak will find the space charge potential difficult to travel through. Therefore, we approximate the effect of the space charges as an additional, uniform potential barrier, equal to the peak height of the space charge potential. The total barrier height $W_B$ will then be:

$$W_B = V_{grid} + \Delta W_{sc} = V_{grid} + \frac{e\rho}{2\varepsilon_0}\frac{d^2}{4}$$

Electrons with energies below $W_B$ are assumed to have a transmission probability of zero:

$$D(W) \approx D_{SBc}(W)D_{SBa}(W)\theta(W - W_B)$$

Here $\theta(W)$ is the Heaviside step function.

$W_B$ is a function of $\rho$, but the charge density $\rho(W)$ as a function of the normal energy $W$ depends on the sum of the cathode-emitted and anode-emitted current:

$$\rho(W)dW = \frac{J_{sum}(W)dW}{\sqrt{\frac{2}{m}(W - W_B)}}$$

Here the summed current is:

$$J_{sum}(W)dW = e[N^c(W) + N^a(W)]D(W)dW$$

Hence, the summed current depends on the transmission probability $D(W)$, which itself is dependent on $W_B$. Therefore, we can solve for these quantities self-consistently using iterative numerical methods. For example, we can find $\rho$ by solving for $\rho$ in this equation:

$$\rho = \int_{V_{grid} + \frac{e\rho}{2\varepsilon_0}\frac{d^2}{4}}^{\infty} \frac{J_{sum}(W)dW}{\sqrt{\frac{2}{m}(W - V_{grid} - \frac{e\rho}{2\varepsilon_0}\frac{d^2}{4})}}$$

We can then determine the total barrier height $W_B$, including the contribution of the space charge potential, and calculate its influence on the current, power, and thermodynamic efficiency of the device.

The exiting heat flux density Q due to the transfer of electrons at the cathode and anode may be approximated by:

$$\dot{Q}^c = \int_0^\infty [(W + kT_a - \mu_c)N^a(W) - (W + kT_c - \mu_c)N^c(W)]D(W)dW$$

$$\dot{Q}^a = \int_0^\infty [(W + kT_c - \mu_a)N^c(W) - (W + kT_a - \mu_a)N^a(W)]D(W)dW$$

Here, $W + kT$ is the total energy of the emitted electron, including the kinetic energy in all directions, and we assume that the replacement electron comes in at the Fermi energy $\mu$. For an electricity-generating heat engine, the cathode (102) should be losing heat energy while the anode should be receiving some heat, hence $\dot{Q}^c > 0$ and $\dot{Q}^a < 0$.

The thermodynamic efficiency $\eta$ is the ratio between work gained to heat used, or, equivalently, the ratio of the

useful power gained ($J_{net}V_0$) to the total heat flux density expended ($|\dot{Q}^c|+\dot{Q}_{other}$):

$$\eta = \frac{J_{net}V_0}{\left|\dot{Q}^c\right|+\dot{Q}_{other}}$$

$\dot{Q}_{other}$ is all heat loss other than $\dot{Q}^c$. For the heat engine having a cathode-anode separation distance 122 (d), $\dot{Q}_{other}$ can be mainly due to the heat transfer between the cathode (102) and anode (108) via evanescent waves ($W_{evanescent}$). This can be approximated by:

$$\dot{Q}_{other} \approx W_{evanescent} \approx 4 \times 10^{-12}\left(\frac{1}{d^2}\right) \text{ in Watt/nm}^2\text{/K, for } d < 1000 \text{ nm.}$$

We can include other forms of heat transfer, for example heat conduction, in $\dot{Q}_{other}$ if needed.

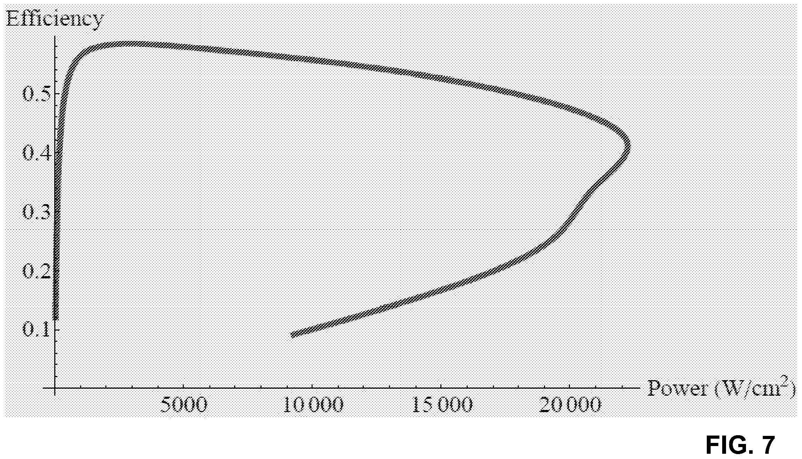

Using the equations provided herein for power (P) and thermodynamic efficiency ($\eta$), these parameters are graphed as a function of varying anode electric potential 202 in Figure 7.

Figure 7 corresponds to a cathode (102) and an anode (108) having field emission enhancement features (103), such that $\beta > 1$. For Figure 7, the cathode temperature $T_c$=1000 K, the anode temperature $T_a$=300 K, the work functions of the cathode and anode $\varphi$=2.1 eV, the cathode-anode separation (122) is 50 nm, the cathode-gate separation (116) and the suppressor-anode separation 120 are both 5 nm, and the field enhancement factors $\beta = 5$ for each of the cathode (102) and anode (108), and the gate and suppressor electric potentials 204, 210 are set to $E_{carnot} - kT_c$.

Figure 7 shows how the thermodynamic efficiency and power of a heat engine are related. By graphing this relationship the tradeoffs between thermodynamic efficiency and power are illustrated. The applied anode bias may be selected to maximize the thermodynamic efficiency, or it may be selected to maximize the power, or the anode electric potential 202 may be selected to correspond to some other point on the graph, such as between the maximum thermodynamic efficiency and the maximum power.

There are a number of embodiments for which a graph such as Figure 7 (or simply the corresponding data) may be created. For example, in an embodiment where the heat engine device has fixed dimensions, such as where the device has already been created, a user may want to select the applied voltage $V_0$ based on a maximum thermodynamic efficiency, power, or optimal but not necessarily maximized values for each.

Further, although Figure 7 shows results of varying the anode potential $V_0$ of the heat engine, there are a number of other parameters of the device on which the thermodynamic efficiency and power output depend. These include, but are not limited to, the cathode temperature $T_c$, the anode temperature $T_a$, the cathode and anode work functions $\varphi_c$ and $\varphi_a$, the gate and suppressor electric potentials 204, 210, the cathode-gate separation 116, suppressor-anode separation 120, and cathode-anode separation 122, and field enhancement factors of the cathode 102 and anode 108.

In different embodiments some of these values may be fixed and other may be variable. For example, in some embodiments the temperature of the cathode 102 and/or anode 108 may be determined by the operating conditions of the device such as ambient temperature and/or a temperature of the heat source that provides heat to the cathode. Further, these values may change in time. Therefore, in embodiments where the operating conditions determine the values of one or more parameters of the heat engine, other values may be selected to optimize the performance of the heat engine for the given parameters.

Further, in some embodiments more than one parameter may be optimized. For example, the anode electric potential 202 may be selected according to optimal values of thermodynamic efficiency and power as shown in Figure 7, and the thermodynamic efficiency and power calculated as a function of varying gate and suppressor electric potentials 204, 210.

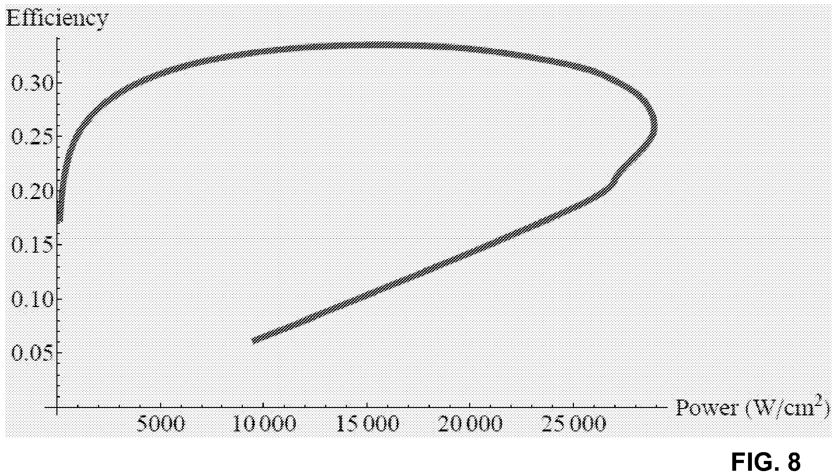

Figure 8 shows the thermodynamic efficiency plotted versus power for varying gate and suppressor electric potentials 204, 210. Figure 8 corresponds to a cathode (102) and an anode (108) having no field emission enhancement features (103), such that $\beta = 1$. For Figure 8, the cathode temperature $T_c$=1000 K, the anode temperature $T_a$=300 K, the work functions of the cathode and anode $\varphi$=2.1 eV, the cathode-anode separation (122) is 50 nm, the cathode-gate separation (116) and the suppressor-anode separation 120 are both 2 nm, and the anode electric potential 202 is $4k(T_c - T_a)$.

In one example a method of optimizing the performance of a heat engine comprises: determining substantially fixed parameters of the heat engine, the substantially fixed parameters including at least one of a cathode-gate separation, a suppressor-anode separation, and a cathode-anode separation; calculating a first relative thermodynamic efficiency and/or a first relative power output of the heat engine as a function of the substantially fixed parameters and as a function of a first set of values for variable parameters of the heat engine, the variable parameters including a cathode temperature, an anode temperature, an anode electric potential, a gate electric potential, and a suppressor electric potential; calculating a second relative thermodynamic efficiency and/or a second relative power output of the heat engine as a function of the substantially fixed parameter and as a function of a second set of values for the variable parameters, wherein at least one variable parameter has a different value in the first and second sets of values; and setting the at least one variable parameter according to the calculated first and second relative thermodynamic efficiencies and/or according to the calculated first and second relative power outputs.

A method of the example as described above may be employed when, for example, a device including a heat engine is received and the device has been manufactured with a substantially fixed cathode-gate separation (116), suppressor-anode separation (120), and/or cathode-anode separation (122). Or, in some examples, the device may not yet have been manufactured but some parameters of the device may be fixed for other reasons. Determining the substantially fixed parameters may include measuring the parameters, receiving the parameters (wherein the parameters may be, for example, listed on the device, provided in a computer program, or provided in a different way), or determining the fixed parameters in a different way. Further, the substantially fixed parameters may include a cathode and/or anode field enhancement factor (or, more generally, a cathode and/or anode geometry). The substantially fixed parameters may further include the cathode work function (213), anode work function (219), cathode and anode band structures, and/or cathode and anode emissivities. Although parameters that may be substantially fixed have been listed above, in some embodiments there may be only one substantially fixed parameter, or there may be more or different substantially fixed parameters. Which parameters are substantially fixed and which ones are variable may depend on the particular embodiment.

For one or more substantially fixed parameters of the heat engine, the relative power output and/or the relative thermodynamic efficiency may be calculated for one or more variable parameters, and the one or more variable parameters may be selected according to a chosen value for the relative power output and/or relative thermodynamic efficiency. For calculations of relative thermodynamic efficiency and/or relative power output for more than one variable parameter, the variable parameters may be varied individually or simultaneously for each calculation.

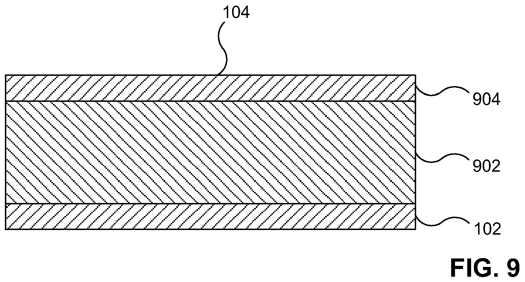

In some embodiments, the gate (104) and/or the suppressor (106) may include a thin film (904), as shown in FIG. 9 (FIG. 9 shows an embodiment with a cathode (102), dielectric (902), and thin film (904) that forms the gate (104), however a similar embodiment includes an anode (108), dielectric (902), and thin film (904) that forms the suppressor (106)), where the thin film (904) may be metal and/or graphene, and where graphene may be a single layer or a bilayer film. The graphene may, in some embodiments, include a graphene allotrope, doped graphene, and/or functionalized graphene. The thin film (904) may be fabricated by depositing the dielectric (902) on the cathode (102) and/or anode (108), then depositing the thin film (904) of metal or graphene that forms the gate (104) and/or suppressor (106). In some embodiments, the dielectric (902) can be at least partially etched away, or in other embodiments it may be left in place. Thin film grids as described above that may be used for the gate (104) and/or suppressor (106) have been used for cathodes, such as in metal-insulator-metal tunneling cathodes, and also in metal-oxide-semiconductor cathodes. These emitters include a metal or semiconductor base electrode, an insulator, and a thin top electrode serving as the gate/suppressor. Although FIG. 9 shows a single thin film (904) that forms the gate (104), in some embodiments two or more thin films such as the film (904) may form the gate.

In an embodiment including a dielectric (902) proximate to the cathode (102) and/or anode (108), the gate (104) and/or suppressor (106) may be a thin film as described with respect to FIG. 9, or the gate (104) and/or the suppressor (106) may have a different configuration. The dielectric (902) may be used to support the gate (104) and/or suppressor (106), and/or it may serve to maintain the separation between the cathode (102) and gate (104) and/or the separation between the anode (108) and suppressor (106). In some embodiments, the dielectric (902) may be silicon oxide ($SiO_2$), boron nitride, diamond, and/or a self-healing dielectric, e.g., glassy rather than crystalline materials.

In different embodiments, at least one of the cathode (102) and anode (108) includes at least one of: tungsten, thoriated tungsten, an oxide-coated refractory metal, a boride, lanthanum hexaboride, molybdenum, tantalum, and hafnium.

In particular, in an embodiment where the cathode (102) is heated, the cathode (102) may include thoriated tungsten, which has a work function of approximately 2.5 eV. When heated, the lower-work-function thorium in the material migrates to the surface. In another embodiment of a heated cathode (102), the cathode (102) includes an oxide-coated refractory metal, which has a work function of approximately 2 eV. In yet another embodiment of a heated cathode (102), the cathode (102) includes a boride having a work function of approximately 2.5 eV. In particular, borides such as lanthanum hexaboride are amenable to physical vapor deposition techniques, and the cathode may be relatively easily coated with these materials.

In an embodiment of a heat engine where the cathode (102) is heated, but at a relatively low temperature (e.g., scavenging waste heat), a material with a relatively low work function, such as diamond-like carbon (DLC), may be incorporated as a coating for the cathode (102). In some embodiments the DLC may be doped with nitrogen. DLC is amenable to low temperature deposition techniques, and may be directly coated on Spindt tips, for example.

In some embodiments at least one of the cathode (102) and anode (108) includes diamond, and, in particular, may be coated with diamond. A diamond coating can be deposited from a methane atmosphere. Pure diamond has a relatively high work function, however diamond can be doped (with, for example, hydrogen) to have a low work function, and may be especially useful at relatively low operating temperatures. Hydrogen-terminated diamond surfaces have been found to exhibit negative electron affinity (NEA). To further increase field emission with diamond coatings, the diamond may be selected to have small grain sizes, or nano-crystalline diamond may be used. To take full advantage of the NEA of diamond at relatively low applied fields, the diamond may be n-type doped to place its Fermi level close to the conduction band. Further, since pure diamond can withstand electric field stresses up to about 1-2 V/nm before dielectric breakdown commences, it may be used as the dielectric to support the gate (104) and/or suppressor (106) relative to the anode (102) and/or the cathode (108).

In some embodiments, the cathode (102) and/or the anode (108) may include one or more carbon nanotubes that serve as field emission enhancement feature(s) (103). There may be a single nanotube serving as a single field emission enhancement feature (103) or multiple nanotubes serving as multiple field emission enhancement features (103) depending on the particular embodiment. For embodiments including multiple nanotubes (sometimes called nanotube forests), individual nanotubes may be selectively ablated to control emission. In some embodiments one or more carbon nanobuds may serve as one or more field emission enhancement feature(s) (103).

In some embodiments the cathode (102) and/or the anode may include a semiconductor, which may include silicon. In some embodiments the semiconductor may be doped. Specifically, doping the semiconductor may change its density of states, and so a semiconductor may be doped according to a selected density of states. A semiconductor cathode (102) and/or anode (108) may further be coated in order to vary the electron affinity and/or the work function, and/or to optimize the performance and/or the stability of the heat engine. The semiconductor may further be doped to vary the electron affinity, in some cases producing negative electron affinity (NEA) material.

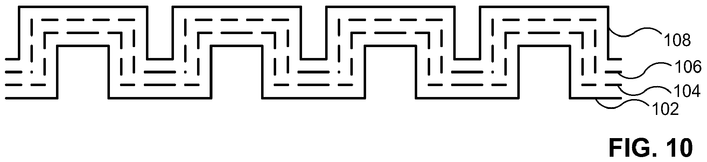

In some embodiments the cathode (102) and anode (108) may form a substantially interlocking structure ("interlocking combs"), as shown in FIG. 10. In FIG. 10 the gate (104) and the suppressor (106) are shown as being substantially continuous, however in some embodiments they may be discontinuous. Further, the spacings in the gate (104) and suppressor (106) shown in FIG. 10 are largely symbolic, and may be oriented differently according to a particular embodiment. Notably, the comb structure of the cathode (102) and anode (108) are relatively large in comparison with the size of a field emission enhancement structure (103), and an embodiment that employs such a comb structure may also include one or more field emission enhancement structures (103), although these are not shown in FIG. 10. The structure of FIG. 10 shows a cathode (102) having a spatially-varying slope, and an anode (108) also having a spatially varying slope that is complementary to the spatially-varying slope of the cathode (102). The spatially-varying slopes of the cathode (102) and anode (108) shown in FIG. 10 are substantially periodic, however in other embodiments they may be a-periodic and/or quasi-periodic. In some embodiments the slope of the cathode (102) and/or the slope of the anode (108) may be more smoothly varying that what is shown in FIG. 10. As shown in FIG. 10, the cathode-anode separation (122) varies slightly, however this separation is minimized. In some embodiments the cathode-anode separation (122) is substantially constant. In other embodiments, the cathode-anode separation (122) may have greater spatial variations, or in the case where the cathode (102) and anode (108) are substantially sinusoidal, the cathode-anode separation (122) may be configured with very little spatial variation.

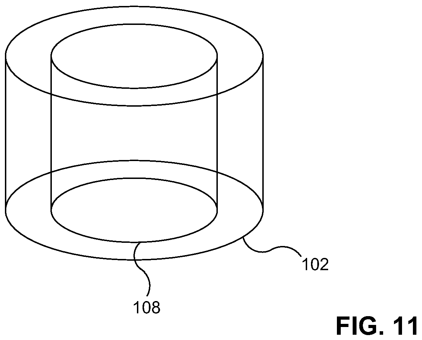

In one embodiment, shown in FIG. 11, the cathode (102) and anode (108) are substantially tubular, wherein at least a portion of the anode (108) is substantially circumscribed by at least a portion of the cathode (102). In this embodiment electrons flow radially from the cathode (102) to the anode (108), and vice-versa. Although the cathode (102) and anode (108) are shown as being substantially cylindrical in FIG. 11, in some embodiments there may be deviations from the cylindrical structure (i.e., they may be dented, their cross-sections may be an n-gon such as a hexagon or octagon, or they may form a different type of substantially co-axial structure). In some embodiments, cathode (102) may form the inner structure and the anode (108) may form the outer structure. Further, in some embodiments a coolant or heating structure may be placed inside the inner structure (for example, where the anode (108) forms the inner structure of a heat engine, a coolant may be configured to flow through or proximate to the anode (108), or where the cathode (102) forms the inner structure of a heat engine, a heating mechanism such as a heated fluid may be configured to flow through or proximate the cathode (102)). In some embodiments the gap between the cylinders as shown in FIG. 11 may change as a function of the temperature of the cylinders. The gate (104) and suppressor (106) are not shown in FIG. 11 for.

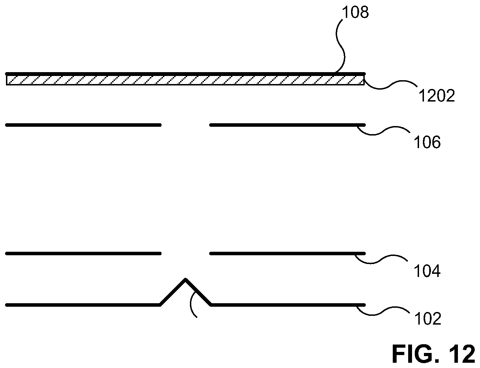

In an embodiment shown in FIG. 12 a thin dielectric coating (1202) is included on the anode (108). The thin dielectric coating may, in some embodiments, include a negative electron affinity (NEA) material such as hydrogen terminated diamond, which may be deposited on a metal that forms the anode (108). Such an embodiment may lower the effective work function of the metal that forms the anode (108).

In one example not being part of the claimed invention the NEA material forms the anode (108), and in this example not being part of the claimed invention the suppressor (106) may not be included and the device may still function as a heat engine. In this example not being part of the claimed invention the NEA material may be chosen or doped such that its electron quasi-Fermi level is close to the conduction band.

In some embodiments, one or more of the gate (104) and suppressor (106) (and/or other grids that may be incorporated in the design) may be at least partially coated with one or more insulating materials.

In one embodiment all or part of the apparatus may be fabricated, e.g. via lithography, on a substrate. For example, in one embodiment the cathode (102), gate (104), suppressor (106), and the anode (108) are formed via lithography on a substrate such that they are all substantially one-dimensional and coplanar.

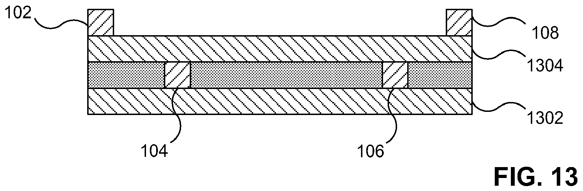

In another embodiment, a cross-section of which is shown in FIG. 13, the gate (104) and the suppressor (106) are fabricated on a first substrate (1302) and the cathode (102) and anode (108) are fabricated on a second substrate (1304), wherein the first and second substrates (1302, 1304) are then positioned such that together the elements (1302, 1304, 1306, 1308) form the field emission device. In this embodiment the gate (104) and the suppressor (106) are effectively insulated from the cathode (102) and the anode (108) by the second substrate (1304). There are many other embodiments that are similar to this that may be implemented. For example, different elements such as (1302, 1304, 1306, 1308) may each be fabricated on their own substrate. Further, additional layers of insulators or other materials may be incorporated according to the particular embodiment. Further, more or fewer elements such as (1302, 1304, 1306, 1308) maybe incorporated in the designs. There are many permutations that may be designed that incorporate the idea of fabricating elements on a substrate and combining the substrates to form a field emission device.

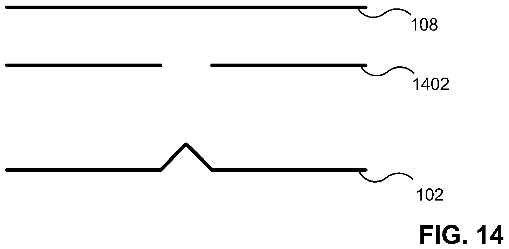

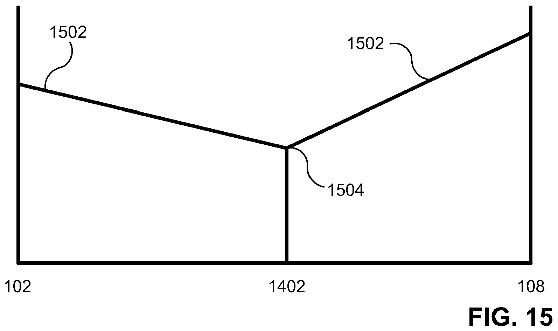

In some embodiments the gate (104) and the suppressor (106) may be created with a single grid, as shown in FIG. 14. The resulting potential (1502) as a function of distance from the cathode in the x-direction 126 is shown in FIG. 15 for the embodiment shown in FIG. 14. This embodiment is similar to that of FIG. 1, but having a single grid (the gate/suppressor 1402) that replaces the gate (104) and the suppressor (106). In this embodiment, the gate/suppressor (1402) is placed close enough to the anode (108) to be able to induce electron emission from the anode (108). Further, it can also be sufficiently close to the cathode (102) to induce electron emission from the cathode (102), and has a gate/suppressor electric potential (1504) that is selected to produce a net flow of electrons from the cathode (102) to the anode (108). There are a number of ways of constructing the apparatus of FIG. 14. In one embodiment, a gated field-emitter array such as a Spindt array is fabricated to produce the cathode (102) and the gate/suppressor (1402), and an anode (108) is arranged proximate to the gate/suppressor (1402). In another embodiment, the gate/suppressor (1402) is supported on and proximate to the anode (108), and there is no additional grid structure supported on the cathode (102), although the cathode (102) may still have field-enhancement structures.

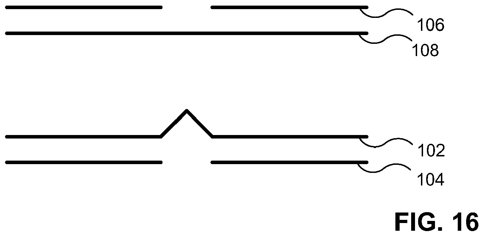

In some embodiments the field emission device is back-gated, as shown in FIG. 16. In FIG. 16, the gate (104) and the suppressor (106) are not positioned between the cathode (102) and anode (108), rather, the cathode (102) and anode (108) are positioned between the gate (104) and suppressor (106). Although the configuration of FIG. 16 is different in this way from the configuration of FIG. 1, they both may be configured as heat engines, such that electrons are emitted from both the cathode (102) and anode (108) and produce a net flow of electrons from the cathode (102) to the anode (108). The embodiment of FIG. 16 may include a dielectric layer between the gate (104) and cathode (102), and or between the anode (108) and suppressor (106). In such an embodiment, the dielectric (an example of a dielectric included between elements is shown in FIG. 9) may be continuous or discontinuous. Further, the apparatus as shown in FIG. 16 may be configured to reduce or remove accumulations of charge that may occur, for example, as a result of a dielectric layer. As described previously with respect to other embodiments described herein, there may be more or fewer elements than shown in FIG. 16. Further, the order of the elements may be different than what is shown in FIG. 16. For example, FIG. 16 shows the order being gate (104), cathode (102), anode (108), suppressor (106). However, in other embodiments the order may be gate (104), cathode (102), suppressor (106), anode (108). Or, the elements may be in a different order.

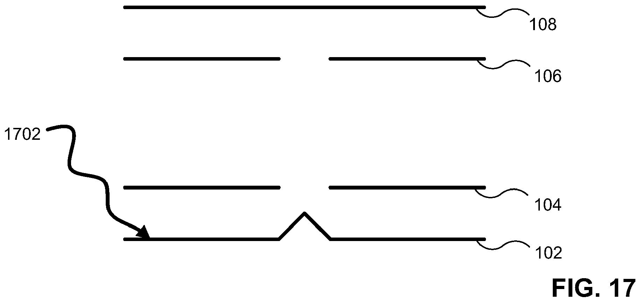

In some embodiments, emission from the cathode (102) may be enhanced electromagnetically, as shown in FIG. 17. FIG. 17 is shown with the configuration of FIG. 1 as an example, however any of the embodiments described herein may include enhanced cathode emission via electromagnetic energy. FIG. 17 shows electromagnetic energy (1702) incident on the cathode (102). This electromagnetic energy (1702) may be used to increase the number of electrons emitted, the rate of electrons emitted, and/or the energy of the emitted electrons from the cathode (102), which may therefore increase the power density of the device. In some embodiments the properties of the cathode (102) such as the cathode thickness, the cathode materials such as dopants, may be selected such that the photo-excited electrons tend to be emitted from the cathode (102) before they thermalize, or after they thermalize in the conduction band. FIG. 17 shows the electromagnetic energy (1702) hitting the cathode (102) at a single location, however in different embodiments the electromagnetic energy (1702) may impinge on a greater area of the cathode (102). The source of the electromagnetic energy (1702) includes, but is not limited to, solar and/or ambient electromagnetic energy, radiation from a local heat source, one or more lasers, and/or a different source of electromagnetic energy. There are many sources of electromagnetic energy that may be used in an embodiment such as that shown in FIG. 17 and one skilled in the art may select the source according to the particular embodiment. The properties of the electromagnetic energy (1702) such as the frequency, polarization, propagation direction, intensity, and other properties may be selected according to a particular embodiment, and in some embodiments may be selected to enhance the performance of the device. Further, optical elements such as lenses, photonic crystals, mirrors, or other elements may be incorporated in an embodiment such as that shown in FIG. 17, for example, to adjust the properties of the electromagnetic energy. In some embodiments the emission from the cathode (102) may be enhanced sufficiently such that the position and/or electric potentials applied to the gate (104) and/or suppressor (106) may be adjusted according.

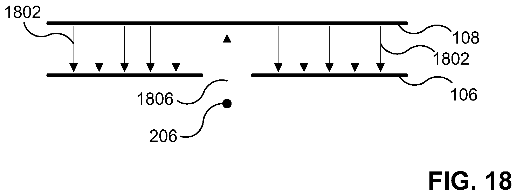

In some embodiments the suppressor (106) and the anode (108) as shown and described with respect to FIGS. 1 and 2 may be incorporated in a different device, such as a different thermionic converter, a thermionic refrigerator, a photomultiplier, an electron multiplier, low energy electron detectors, or another device. In these embodiments the suppressor (106) is placed proximate to the anode (108) (in the case of an electron multiplier, the anode (108) is usually called a dynode in conventional literature; however, for consistency with other embodiments the word anode is used herein), and the suppressor electric potential (210) and the anode electric potential (202) are selected such that the net electric field (1802) points from the anode (108) to the suppressor (106). This electric field (1802) is configured such that an electron placed in the field experiences a force in a direction pointing away from the anode (108). Although conventionally electric field lines are drawn according to the direction of force on a positive test particle, here (and in particular, in Figure 18) they are drawn according to the direction of force on a negative test particle (e.g., electrons) since most of the embodiments herein employ electrons.

For a first set of electrons (206) having energies above a first threshold energy (208) there will be some possibility that the electrons can pass through the field (1802) and to the anode (108), such as in the direction (1806) as shown in FIG. 18. Depending on the material of the anode (108) the electrons (206) may be configured to bind to the anode (108) (such as in the embodiment of a heat engine) or the electrons may be configured to interact with the anode (108) to produce secondary electrons (such as in the embodiment of an electron multiplier). Although the first set of electrons (206) are represented symbolically in FIG. 18 as a single object, one skilled in the art will understand that this is a simplified representation and that the actual transport and spatial distribution of electrons is more complex.

For simplicity, FIG. 18 is substantially two-dimensional and the field (1802) is shown as being substantially constant and pointing in one direction. However the field (1802) may vary in one, two, or three spatial dimensions, and/or the field may have components along each of the three dimensions. For example, the field may include edge effects (not shown) near the edge(s) of the suppressor. The embodiment of FIG. 18 includes a segment of the embodiments described previously with respect to FIGS. 1, 2, and other related figures that include the suppressor (106) and the anode (108). Therefore, the embodiment of FIG. 18 may be included in previously described embodiments and/or it may be incorporated in other, different embodiments than previously described, such as in an electron multiplier. Further, components as described previously herein such as the circuitry (402) and the meters (404, 406, 408) are also included in the embodiment of FIG. 18.

The suppressor electric field (1802) is varied. The suppressor electric field (1802) is varied based on measurements of current. It may be varied substantially periodically or in a different way.

The suppressor electric field (1802) includes the net field between the anode (108) and the suppressor (106). Different embodiments include elements that produce an electric field, which add together to produce an electric field such as (1802) that points away from the anode (108) (i.e., the electric field (1802) provides a force on an electron in the direction of the electric field (1802)). For example, in the embodiment of FIG. 1, an electric potential may be applied to each of the cathode (102), gate (104), suppressor (106), and anode (108). There may even be additional elements having an applied electric potential. For the embodiment as described with respect to FIG. 18, the net effect of all of the electric fields produced by the electric potentials includes an electric field that is between the anode (108) and the suppressor (106) and has at least one component that points away from the anode (108) and to the suppressor (106) (where, again, the electric field provides a force on an electron in the direction of the electric field (1802)).

Those skilled in the art will appreciate that the foregoing specific exemplary processes and/or devices and/or technologies are representative of more general processes and/or devices and/or technologies taught elsewhere herein, such as in the claims filed herewith and/or elsewhere in the present application.

Those having skill in the art will recognize that the state of the art has progressed to the point where there is little distinction left between hardware, software, and/or firmware implementations of aspects of systems; the use of hardware, software, and/or firmware is generally (but not always, in that in certain contexts the choice between hardware and software can become significant) a design choice representing cost vs. efficiency tradeoffs. Those having skill in the art will appreciate that there are various vehicles by which processes and/or systems and/or other technologies described herein can be effected (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware. Hence, there are several possible vehicles by which the processes and/or devices and/or other technologies described herein may be effected, none of which is inherently superior to the other in that any vehicle to be utilized is a choice dependent upon the context in which the vehicle will be deployed and the specific concerns (e.g., speed, flexibility, or predictability) of the implementer, any of which may vary. Those skilled in the art will recognize that optical aspects of implementations will typically employ optically-oriented hardware, software, and or firmware.

In some implementations described herein, logic and similar implementations may include software or other control structures. Electronic circuitry, for example, may have one or more paths of electrical current constructed and arranged to implement various functions as described herein. In some implementations, one or more media may be configured to bear a device-detectable implementation when such media hold or transmit a device detectable instructions operable to perform as described herein. In some variants, for example, implementations may include an update or modification of existing software or firmware, or of gate arrays or programmable hardware, such as by performing a reception of or a transmission of one or more instructions in relation to one or more operations described herein. Alternatively or additionally, in some variants, an implementation may include special-purpose hardware, software, firmware components, and/or general-purpose components executing or otherwise invoking special-purpose components. Specifications or other implementations may be transmitted by one or more instances of tangible transmission media as described herein, optionally by packet transmission or otherwise by passing through distributed media at various times.

Alternatively or additionally, implementations may include executing a special-purpose instruction sequence or invoking circuitry for enabling, triggering, coordinating, requesting, or otherwise causing one or more occurrences of virtually any functional operations described herein. In some variants, operational or other logical descriptions herein may be expressed as source code and compiled or otherwise invoked as an executable instruction sequence. In some contexts, for example, implementations may be provided, in whole or in part, by source code, such as C++, or other code sequences. In other implementations, source or other code implementation, using commercially available and/or techniques in the art, may be compiled/implemented/translated/converted into a high-level descriptor language (e.g., initially implementing described technologies in C or C++ programming language and thereafter converting the programming language implementation into a logic-synthesizable language implementation, a hardware description language implementation, a hardware design simulation implementation, and/or other such similar mode(s) of expression). For example, some or all of a logical expression (e.g., computer programming language implementation) may be manifested as a Verilog-type hardware description (e.g., via Hardware Description Language (HDL) and/or Very High Speed Integrated Circuit Hardware Descriptor Language (VHDL)) or other circuitry model which may then be used to create a physical implementation having hardware (e.g., an Application Specific Integrated Circuit). Those skilled in the art will recognize how to obtain, configure, and optimize suitable transmission or computational elements, material supplies, actuators, or other structures in light of these teachings.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link (e.g., transmitter, receiver, transmission logic, reception logic, etc.), etc.).

In a general sense, those skilled in the art will recognize that the various embodiments described herein can be implemented, individually and/or collectively, by various types of electro-mechanical systems having a wide range of electrical components such as hardware, software, firmware, and/or virtually any combination thereof; and a wide range of components that may impart mechanical force or motion such as rigid bodies, spring or torsional bodies, hydraulics, electro-magnetically actuated devices, and/or virtually any combination thereof. Consequently, as used herein "electro-mechanical system" includes, but is not limited to, electrical circuitry operably coupled with a transducer (e.g., an actuator, a motor, a piezoelectric crystal, a Micro Electro Mechanical System (MEMS), etc.), electrical circuitry having at least one discrete electrical circuit, electrical circuitry having at least one integrated circuit, electrical circuitry having at least one application specific integrated circuit, electrical circuitry forming a general purpose computing device configured by a computer program (e.g., a general purpose computer configured by a computer program which at least partially carries out processes and/or devices described herein, or a microprocessor configured by a computer program which at least partially carries out processes and/or devices described herein), electrical circuitry forming a memory device (e.g., forms of memory (e.g., random access, flash, read only, etc.)), electrical circuitry forming a communications device (e.g., a modem, communications switch, optical-electrical equipment, etc.), and/or any non-electrical analog thereto, such as optical or other analogs. Those skilled in the art will also appreciate that examples of electro-mechanical systems include but are not limited to a variety of consumer electronics systems, medical devices, as well as other systems such as motorized transport systems, factory automation systems, security systems, and/or communication/computing systems. Those skilled in the art will recognize that electro-mechanical as used herein is not necessarily limited to a system that has both electrical and mechanical actuation except as context may dictate otherwise.

In a general sense, those skilled in the art will recognize that the various aspects described herein which can be implemented, individually and/or collectively, by a wide range of hardware, software, firmware, and/or any combination thereof can be viewed as being composed of various types of "electrical circuitry." Consequently, as used herein "electrical circuitry" includes, but is not limited to, electrical circuitry having at least one discrete electrical circuit, electrical circuitry having at least one integrated circuit, electrical circuitry having at least one application specific integrated circuit, electrical circuitry forming a general purpose computing device configured by a computer program (e.g., a general purpose computer configured by a computer program which at least partially carries out processes and/or devices described herein, or a microprocessor configured by a computer program which at least partially carries out processes and/or devices described herein), electrical circuitry forming a memory device (e.g., forms of memory (e.g., random access, flash, read only, etc.)), and/or electrical circuitry forming a communications device (e.g., a modem, communications switch, optical-electrical equipment, etc.). Those having skill in the art will recognize that the subject matter described herein may be implemented in an analog or digital fashion or some combination thereof.

Those skilled in the art will recognize that at least a portion of the devices and/or processes described herein can be integrated into an image processing system. Those having skill in the art will recognize that a typical image processing system generally includes one or more of a system unit housing, a video display device, memory such as volatile or non-volatile memory, processors such as microprocessors or digital signal processors, computational entities such as operating systems, drivers, applications programs, one or more interaction devices (e.g., a touch pad, a touch screen, an antenna, etc.), control systems including feedback loops and control motors (e.g., feedback for sensing lens position and/or velocity; control motors for moving/distorting lenses to give desired focuses). An image processing system may be implemented utilizing suitable commercially available components, such as those typically found in digital still systems and/or digital motion systems.

Those skilled in the art will recognize that at least a portion of the devices and/or processes described herein can be integrated into a data processing system. Those having skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

Those skilled in the art will recognize that it is common within the art to implement devices and/or processes and/or systems, and thereafter use engineering and/or other practices to integrate such implemented devices and/or processes and/or systems into more comprehensive devices and/or processes and/or systems. That is, at least a portion of the devices and/or processes and/or systems described herein can be integrated into other devices and/or processes and/or systems via a reasonable amount of experimentation. Those having skill in the art will recognize that examples of such other devices and/or processes and/or systems might include - as appropriate to context and application -- all or part of devices and/or processes and/or systems of (a) an air conveyance (e.g., an airplane, rocket, helicopter, etc.), (b) a ground conveyance (e.g., a car, truck, locomotive, tank, armored personnel carrier, etc.), (c) a building (e.g., a home, warehouse, office, etc.), (d) an appliance (e.g., a refrigerator, a washing machine, a dryer, etc.), (e) a communications system (e.g., a networked system, a telephone system, a Voice over IP system, etc.), (f) a business entity (e.g., an Internet Service Provider (ISP) entity such as Comcast Cable, Qwest, Southwestern Bell, etc.), or (g) a wired/wireless services entity (e.g., Sprint, Cingular, Nextel, etc.), etc.

In certain cases, use of a system or method may occur in a territory even if components are located outside the territory. For example, in a distributed computing context, use of a distributed computing system may occur in a territory even though parts of the system may be located outside of the territory (e.g., relay, server, processor, signal-bearing medium, transmitting computer, receiving computer, etc. located outside the territory).

A sale of a system or method may likewise occur in a territory even if components of the system or method are located and/or used outside the territory.

Further, implementation of at least part of a system for performing a method in one territory does not preclude use of the system in another territory.

One skilled in the art will recognize that the herein described components (e.g., operations), devices, objects, and the discussion accompanying them are used as examples for the sake of conceptual clarity and that various configuration modifications are contemplated. Consequently, as used herein, the specific exemplars set forth and the accompanying discussion are intended to be representative of their more general classes. In general, use of any specific exemplar is intended to be representative of its class, and the non-inclusion of specific components (e.g., operations), devices, and objects should not be taken limiting.

With respect to the use of substantially any plural and/or singular terms herein, those having skill in the art can translate from the plural to the singular and/or from the singular to the plural as is appropriate to the context and/or application. The various singular/plural permutations are not expressly set forth herein for sake of clarity.

The herein described subject matter sometimes illustrates different components contained within, or connected with, different other components. It is to be understood that such depicted architectures are merely exemplary, and that in fact many other architectures may be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components, and/or wirelessly interactable, and/or wirelessly interacting components, and/or logically interacting, and/or logically interactable components.

In some instances, one or more components may be referred to herein as "configured to," "configured by," "configurable to," "operable/operative to," "adapted/adaptable," "able to," "conformable/conformed to," etc. Those skilled in the art will recognize that such terms (e.g. "configured to") can generally encompass active-state components and/or inactive-state components and/or standby-state components, unless context requires otherwise.

Aspects of the subject matter described herein are set out in the following numbered clauses not defining the present invention that is defined in the claims.

1. A method comprising:

applying a suppressor electric field to a suppressor region between a suppressor and an anode, wherein the suppressor electric field is selected to provide a force on an electron in a direction pointing away from the anode in the suppressor region;
passing a first set of electrons through the suppressor region and to the anode, in a direction opposite the force; and
interacting at least a portion of the first set of electrons with the anode.

2. The method of Clause 1 wherein the passed portion of the first set of electrons form a current at the anode, and further comprising:

measuring a property of the current; and
varying the suppressor electric field according to the measured property of the current.

3. The method of Clause 1 wherein the passed portion of the first set of electrons form a current at the anode, and further comprising:
powering a device with the current.

4. The method of Clause 1 further comprising:

measuring a temperature of the anode; and
varying the suppressor electric field according to the measured temperature of the anode.

5. The method of Clause 1 further comprising:

changing a temperature of the anode; and
varying the suppressor electric field according to the change in temperature of the anode.

6. The method of Clause 1 further comprising:
varying the suppressor electric field as a function of time.
7. The method of Clause 1 further comprising:

determining an electron transport time corresponding to the first set of electrons; and

varying the suppressor electric field according to the determined electron transport time.

8. The method of Clause 1 further comprising:

determining an electron velocity corresponding to the first set of electrons; and
varying the suppressor electric field according to the determined electron velocity.

9. The method of Clause 1 wherein passing a first set of electrons through the suppressor region and to the anode, in a direction opposite the force includes:
accelerating the first set of electrons with the suppressor electric field.
10. The method of Clause 1 further comprising:
passing a second set of electrons in the direction of the force.
11. An apparatus comprising:

an anode receptive to a first set of electrons; and
a suppressor positioned proximate to the anode and receptive to a power source to produce a suppressor electric field selected to provide a force on an electron in a direction pointing away from the anode, wherein the suppressor electric field is further selected to pass the first set of electrons to the anode.

12. The apparatus of Clause 11 wherein the suppressor electric field has a field strength selected to induce electron emission from the anode for electrons having energies above a threshold energy.
13. The apparatus of Clause 11 wherein the anode is receptive to the first set of electrons to produce a current.
14. The apparatus of Clause 11 further comprising:
a dielectric layer supported by the anode, the dielectric layer being supportive of the suppressor.
15. The apparatus of Clause 11 wherein the anode and the suppressor are separated by a distance that is 1-100 nm.
16. The apparatus of Clause 11 further comprising at least one electron traversable path, extending through the suppressor and to the anode.
17. The apparatus of Clause 11 wherein the anode includes at least one field emission modifying feature.
18. The apparatus of Clause 11 wherein the anode comprises a material having an asymmetric Fermi surface with a selected orientation relative to the anode surface.
19. The apparatus of Clause 11 wherein the anode comprises a material having a locally minimized density of states at a selected electron energy.
20. The apparatus of Clause 11 further comprising:
circuitry operably connected to the power source to vary the suppressor electric field.
21. The apparatus of Clause 20 further comprising:
a meter configured to measure a current at the anode and operably connected to the circuitry, wherein the circuitry is responsive to the measured current to vary the suppressor electric field.
22. The apparatus of Clause 20 further comprising:
a meter configured to measure a temperature at the anode and operably connected to the circuitry, wherein the circuitry is responsive to the measured temperature to vary the suppressor electric field.
23. The apparatus of Clause 20 wherein the circuitry is configured to vary the suppressor electric field substantially periodically.
24. The apparatus of Clause 11 wherein the anode is operably connected to a device to provide current to the device.
25. The apparatus of Clause 11 further comprising:
a housing having a volume arranged to support the anode and the suppressor, the housing being supportive of an internal pressure lower than atmospheric pressure.
26. The apparatus of Clause 25 further comprising:
a pump operably connected to the housing to change the internal pressure.
27. An electron multiplier comprising:

an array of anodes, each anode in the array of anodes being receptive to electrons to produce secondary electrons; and

at least one suppressor positioned proximate to at least one anode in the array of anodes, the at least one suppressor being receptive to a power source to produce a suppressor electric field selected to provide a force on an electron in a direction pointing away from the at least one anode, wherein the suppressor electric field is further selected to pass electrons to the at least one anode.

28. The electron multiplier of Clause 27 further comprising:
circuitry operably connected to the power source to vary the suppressor electric field.
29. The electron multiplier of Clause 28 further comprising:

an output operably connected to the array of anodes and configured to produce a current; and
wherein the circuitry is operably connected to the output and responsive to the output to vary the suppressor electric field.

30. A thermionic converter comprising:

a cathode configured to produce a first set of electrons;
an anode receptive to a first portion of the first set of electrons to produce a current; and
a suppressor positioned proximate to the anode and receptive to a power source to produce a suppressor electric field selected to provide a force on the first set of electrons in a direction pointing away from the anode in a region located between the suppressor and the anode, wherein the suppressor electric field is further selected to pass the first portion of the first set of electrons.

31. The thermionic converter of Clause 30 wherein the suppressor electric field is further selected to block passage of a second portion of the first set of electrons.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true scope of the subject matter described herein. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flows are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims. What is claimed is:

**Claims**

1. A method comprising:

   applying a suppressor electric field to a suppressor region between a suppressor (106) and an anode (108), wherein the suppressor electric field is selected to provide a force on an electron in a direction pointing away from the anode in the suppressor region;
   passing a first set of electrons (206) through the suppressor region and to the anode, in a direction opposite the force;
   interacting at least a portion of the first set of electrons with the anode, wherein the passed portion of the first set of electrons form a current at the anode; and **characterized by** measuring a property of the current and varying the suppressor electric field according to the measured property of the current.

2. The method of Claim 1, further comprising powering a device with the current.

3. The method of any one of the preceding Claims further comprising at least one of:

   measuring a temperature of the anode and varying the suppressor electric field according to the measured temperature of the anode;
   changing a temperature of the anode and varying the suppressor electric field according to the change in temperature of the anode;
   varying the suppressor electric field as a function of time.

4. The method of any one of the preceding Claims further comprising at least one of:

   determining an electron transport time corresponding to the first set of electrons and varying the suppressor electric field according to the determined electron transport time;
   determining an electron velocity corresponding to the first set of electrons; and varying the suppressor electric field according to the determined electron velocity.

5. The method of any one of the preceding Claims wherein passing a first set of electrons through the suppressor region and to the anode, in a direction opposite the force includes:
   accelerating the first set of electrons with the suppressor electric field.

6. The method of any one of the preceding Claims further comprising:
   passing a second set of electrons in the direction of the force.

7. An apparatus (100) comprising:

   an anode (108) receptive to a first set of electrons;
   a suppressor (106) positioned proximate to the anode and receptive to a power source (114) adapted to produce a suppressor electric field selected to provide a force on an electron in a direction pointing away from the anode, wherein the suppressor electric field is further selected to pass the first set of electrons (206) to the anode circuitry (402) operably connected to the power source adapted to vary the suppressor electric field; and **characterized by** a meter (404) configured to measure a current at the anode and operably connected to the circuitry, wherein the circuitry is responsive to the measured current to vary the suppressor electric field.

8. The apparatus of Claim 7 wherein the suppressor electric field has a field strength selected to induce electron emission from the anode for electrons having energies above a threshold energy.

9. The apparatus of any one of Claims 7 or 8 wherein the anode is at least one of:

   receptive to the first set of electrons to produce a current;
   separated from the suppressor by a distance that is 1-100 nm;
   includes at least one field emission modifying feature;
   operably connected to a device to provide current to the device.

10. The apparatus of any one of Claims 7-9 further comprising at least one of:

    a dielectric layer supported by the anode, the dielectric layer being supportive of the suppressor;
    a housing having a volume arranged to support the anode and the suppressor, the housing being supportive of an internal pressure lower than atmospheric pressure.

11. The apparatus of Claim 10 further comprising a meter configured to measure a temperature at the anode and operably connected to the circuitry, wherein the circuitry is responsive to the measured temperature to vary the suppressor electric field.

12. The apparatus of Claim 10 wherein the circuitry is configured to vary the suppressor electric field substantially periodically.

13. The apparatus of Claim 10 further comprising:

    a pump operably connected to the housing to change the internal pressure.

14. The apparatus of any one of Claims 7-13 further comprising at least one electron traversable path, extending through the suppressor and to the anode.

15. The apparatus of any one of Claims 7-14 wherein the anode comprises a material having at least one of:

    an asymmetric Fermi surface with a selected orientation relative to the anode surface;
    a locally minimized density of states at a selected electron energy.

**Patentansprüche**

1. Verfahren, umfassend:

   Anwenden eines elektrischen Feldes eines Bremsgitters auf ein Bremsgittergebiet zwischen einem Bremsgitter (106) und einer Anode (108), wobei das elektrische Feld des Bremsgitters ausgewählt wird, um eine Kraft auf ein Elektron in einer Richtung bereitzustellen, die in dem Bremsgittergebiet von der Anode weg zeigt;
   Durchleiten einer ersten Gruppe von Elektronen (206) durch das Bremsgittergebiet und zur Anode in einer zur Kraft entgegengesetzten Richtung;
   Wechselwirken mindestens eines Teils der ersten Gruppe von Elektronen mit der Anode, wobei der durchgeleitete Anteil der ersten Gruppe von Elektronen einen Strom an der Anode bildet; und
   **gekennzeichnet durch**:
   Messen einer Eigenschaft des Stroms und Variieren des elektrischen Felds des Bremsgitters gemäß der gemessenen Eigenschaft des Stroms.

2. Verfahren nach Anspruch 1, das außerdem ein Versorgen einer Vorrichtung mit einem Strom umfasst.

3. Verfahren nach einem der vorhergehenden Ansprüche, das mindestens einen der folgenden Schritte umfasst:

   Messen einer Temperatur der Anode und Variieren des elektrischen Felds des Bremsgitters gemäß der gemessenen Temperatur der Anode;
   Verändern einer Temperatur der Anode und Variieren des elektrischen Felds des Bremsgitters gemäß der Temperaturänderung der Anode; und
   Variieren des elektrischen Felds des Bremsgitters als eine Funktion der Zeit.

4. Verfahren nach einem der vorhergehenden Ansprüche, das mindestens einen der folgenden Schritte umfasst:

Ermitteln einer Elektronentransportzeit, die der ersten Gruppe von Elektronen entspricht, und Variieren des elektrischen Felds des Bremsgitters gemäß der ermittelten Elektronentransportzeit; und
Ermitteln einer Elektronengeschwindigkeit, die der ersten Gruppe von Elektronen entspricht, und Variieren des elektrischen Felds des Bremsgitters gemäß der ermittelten Elektronengeschwindigkeit.

5. Verfahren nach einem der vorhergehenden Ansprüche, wobei das Durchleiten einer ersten Gruppe von Elektronen durch das Bremsgittergebiet und zur Anode in einer zur Kraft entgegengesetzten Richtung umfasst:
Beschleunigen der ersten Gruppe von Elektronen mit dem elektrischen Feld des Bremsgitters.

6. Verfahren nach einem der vorhergehenden Ansprüche, das außerdem umfasst:
Durchleiten einer zweiten Gruppe von Elektronen in der Richtung der Kraft.

7. Vorrichtung (100), umfassend:

eine Anode (108), die eine erste Gruppe von Elektronen empfängt;
ein Bremsgitter (106), das in der Nähe der Anode angebracht ist und auf eine Stromquelle (114) reagiert, die geeignet ist, um ein elektrisches Feld des Bremsgitters herzustellen, das ausgewählt wird, um eine Kraft auf ein Elektron in einer Richtung bereitzustellen, die von der Anode weg zeigt, wobei das elektrische Feld des Bremsgitters außerdem ausgewählt wird, um die erste Gruppe von Elektronen (206) zu der Anodenschaltung (402) durchzuleiten, die funktionsfähig mit der Stromquelle verbunden ist, die geeignet ist, das elektrische Feld des Bremsgitters zu variieren; und
**gekennzeichnet durch** eine Messeinrichtung (404), die konfiguriert ist, um einen Strom an der Anode zu messen, und die funktionsfähig mit der Schaltung verbunden ist, wobei die Schaltung auf den gemessenen Strom reagiert, um das elektrische Feld des Bremsgitters zu variieren.

8. Vorrichtung nach Anspruch 7, wobei das elektrische Feld des Bremsgitters eine Feldstärke aufweist, die ausgewählt wird, um eine Elektronenemission von der Anode für Elektronen zu induzieren, die Energien über einer Schwellenwertenergie aufweisen.

9. Vorrichtung nach einem der Ansprüche 7 oder 8, wobei die Anode mindestens eine Eigenschaft aufweist aus:

auf die erste Gruppe von Elektronen zu reagieren, um einen Strom zu erzeugen;
von dem Bremsgitter durch einen Abstand getrennt zu sein, der zwischen 1 und 100 nm liegt;
mindestens ein Merkmal zum Verändern von Feldemissionen zu umfassen;
funktionsfähig mit einem Gerät verbunden zu sein, um dem Gerät einen Strom bereitzustellen.

10. Vorrichtung nach einem der Ansprüche 7 bis 9, die mindestens eines der folgenden Elemente umfasst:

eine dielektrische Schicht, die von der Anode getragen wird, wobei die dielektrische Schicht das Bremsgitter trägt;
ein Gehäuse, das ein Volumen aufweist, um die Anode und das Bremsgitter zu tragen, wobei das Gehäuse einen Innendruck aushält, der geringer als der Atmosphärendruck ist.

11. Vorrichtung nach Anspruch 10, die außerdem eine Messeinrichtung umfasst, die konfiguriert ist, um eine Temperatur an der Anode zu messen, und die funktionsfähig mit der Schaltung verbunden ist, wobei die Schaltung auf die gemessene Temperatur reagiert, um das elektrische Feld des Bremsgitters zu variieren.

12. Vorrichtung nach Anspruch 10, wobei die Schaltung konfiguriert ist, um das elektrische Feld des Bremsgitters im Wesentlichen regelmäßig zu variieren.

13. Vorrichtung nach Anspruch 10, die außerdem umfasst:
eine Pumpe, die funktionsfähig mit dem Gehäuse verbunden ist, um den Innendruck zu verändern.

14. Vorrichtung nach einem der Ansprüche 7 bis 13, die außerdem mindestens einen für Elektronen durchlaufbaren Pfad umfasst, der sich durch das Bremsgitter und zur Anode erstreckt.

15. Vorrichtung nach einem der Ansprüche 7 bis 14, wobei die Anode ein Material umfasst, das mindestens eines der Folgenden aufweist:

eine asymmetrische Fermi-Oberfläche mit einer ausgewählten Orientierung in Bezug auf die Anodenoberfläche; und
eine lokal minimierte Zustandsdichte bei einer ausgewählten Elektronenenergie.

**Revendications**

1. Procédé comprenant les étapes suivantes :

    appliquer un champ électrique suppresseur à une région suppresseuse entre un suppresseur (106) et une anode (108), où le champ électrique suppresseur est sélectionné pour appliquer une force sur un électron dans une direction s'éloignant de l'anode dans la région suppresseuse ;
    faire passer un premier ensemble d'électrons (206) à travers la région suppresseuse et jusqu'à l'anode, dans une direction opposée à la force ;
    faire interagir au moins une partie du premier ensemble d'électrons avec l'anode, où la partie qui est passée du premier ensemble d'électrons forme un courant au niveau de l'anode ; et
    **caractérisé par** la mesure d'une propriété du courant et la variation du champ électrique suppresseur en fonction de la propriété mesurée du courant.

2. Procédé selon la revendication 1, comprenant en outre d'alimenter un dispositif avec le courant.

3. Procédé selon l'une quelconque des revendications précédentes comprenant en outre au moins l'une des étapes suivantes :

    mesurer une température de l'anode et faire varier le champ électrique du suppresseur en fonction de la température mesurée de l'anode ;
    changer la température de l'anode et faire varier le champ électrique du suppresseur en fonction du changement de température de l'anode ;
    faire varier le champ électrique du suppresseur en fonction du temps.

4. Procédé selon l'une quelconque des revendications précédentes comprenant en outre au moins l'une des étapes suivantes :

    déterminer un temps de transport d'électrons correspondant au premier ensemble d'électrons et faire varier le champ électrique suppresseur en fonction du temps de transport d'électrons déterminé ;
    déterminer une vitesse des électrons correspondant au premier ensemble d'électrons ; et faire varier le champ électrique suppresseur en fonction de la vitesse déterminée des électrons.

5. Procédé selon l'une quelconque des revendications précédentes, dans lequel faire passer un premier ensemble d'électrons à travers la région suppresseuse et jusqu'à l'anode, dans une direction opposée à la force, comprend : d'accélérer le premier ensemble d'électrons avec le champ électrique suppresseur.

6. Procédé selon l'une quelconque des revendications précédentes comprenant en outre l'étape suivante : faire passer un second ensemble d'électrons dans la direction de la force.

7. Appareil (100) comprenant :

    une anode (108) recevant un premier ensemble d'électrons ;
    un suppresseur (106) positionné à proximité de l'anode et recevant une source d'énergie (114) adaptée pour produire un champ électrique suppresseur sélectionné pour appliquer une force sur un électron dans une direction s'éloignant de l'anode, où le champ électrique suppresseur est en outre sélectionné pour faire passer le premier ensemble d'électrons (206) jusqu'au circuit de l'anode (402) connecté de manière opérationnelle à la source d'énergie adaptée pour faire varier le champ électrique suppresseur ; et
    **caractérisé par** un dispositif de mesure (404) configuré pour mesurer un courant au niveau de l'anode et connecté de manière opérationnelle au circuit, où le circuit réagit au courant mesuré pour faire varier le champ électrique suppresseur.

8. Appareil selon la revendication 7, dans lequel le champ électrique suppresseur a une intensité de champ sélectionnée pour induire une émission d'électrons depuis l'anode pour les électrons ayant des énergies supérieures à une énergie seuil.

9. Appareil selon l'une quelconque des revendications 7 ou 8, dans lequel l'anode est au moins dans l'un des cas suivants :

réceptive du premier ensemble d'électrons pour produire un courant ;
séparée du suppresseur par une distance de 1 à 100 nm ;
comprend au moins une caractéristique de modification d'émission de champ ;
connectée de manière opérationnelle à un dispositif pour fournir du courant au dispositif.

10. Appareil selon l'une quelconque des revendications 7 à 9, comprenant en outre au moins l'un des éléments suivants :

une couche diélectrique supportée par l'anode, la couche diélectrique supportant le suppresseur ;
un boîtier ayant un volume agencé pour supporter l'anode et le suppresseur, le boîtier supportant une pression interne inférieure à la pression atmosphérique.

11. Appareil selon la revendication 10 comprenant en outre un dispositif de mesure configuré pour mesurer une température au niveau de l'anode et connecté de manière opérationnelle au circuit, où le circuit réagit à la température mesurée pour faire varier le champ électrique suppresseur.

12. Appareil selon la revendication 10, dans lequel le circuit est configuré pour faire varier le champ électrique du suppresseur sensiblement périodiquement.

13. Appareil selon la revendication 10 comprenant en outre :
une pompe connectée de manière opérationnelle au boîtier pour changer la pression interne.

14. Appareil selon l'une quelconque des revendications 7 à 13, comprenant en outre au moins un trajet pouvant être traversé par des électrons, s'étendant à travers le suppresseur et jusqu'à l'anode.

15. Appareil selon l'une quelconque des revendications 7 à 14, dans lequel l'anode comprend un matériau ayant au moins l'une des caractéristiques suivantes :

une surface de Fermi asymétrique avec une orientation sélectionnée par rapport à la surface de l'anode ;
une densité d'états localement minimisée à une énergie électronique sélectionnée.

FIG. 1

FIG. 2

EP 2 801 102 B1

**FIG. 3**

100

108

106

302

304

104

102

103

FIG. 4

```
                              ┌─────────────┐
                              │    Start    │
                              └──────┬──────┘
                                     │
                                     ▼
┌──────────────────────────────────────────────────────────────────────────┐     502
│ applying a gate electric potential to selectively release a first set of   │
│ electrons from a bound state in a first region                             │
└──────────────────────────────────────┬───────────────────────────────────┘
                                        │
                                        ▼
┌──────────────────────────────────────────────────────────────────────────┐     504
│ applying a suppressor electric potential to selectively release a second   │
│ set of electrons from emission from a bound state in a second region       │
│ different from the first region, the second region having an anode         │
│ electric potential that is greater than a cathode electric potential of    │
│ the first region                                                           │
└──────────────────────────────────────┬───────────────────────────────────┘
                                        │
                                        ▼
┌──────────────────────────────────────────────────────────────────────────┐     506
│ binding the passed portion of the first set of electrons in the second     │
│ region                                                                     │
└──────────────────────────────────────┬───────────────────────────────────┘
                                        │
                                        ▼
                              ┌─────────────┐
                              │     End     │
                              └─────────────┘
```

**FIG. 5**

```
                        ┌──────────┐
                        │  Start   │
                        └────┬─────┘
                             │
                             ▼
┌────────────────────────────────────────────────────────────────────────────┐
│ receiving a first signal corresponding to a heat engine, the heat engine     │  602
│ including an anode, cathode, gas-filled region, gate and suppressor           │
└────────────────────────────────────┬─────────────────────────────────────────┘
                                      │
                                      ▼
┌────────────────────────────────────────────────────────────────────────────┐
│ processing the first signal to determine a first power output and/or relative │  604
│ thermodynamic efficiency of the heat engine as a function of an anode electric│
│ potential, a gate electric potential, and a suppressor electric potential     │
└────────────────────────────────────┬─────────────────────────────────────────┘
                                      │
                                      ▼
┌────────────────────────────────────────────────────────────────────────────┐
│ producing a second signal based on a second power output and/or thermodynamic │  606
│ efficiency greater than the first power output and/or thermodynamic efficiency │
└────────────────────────────────────┬─────────────────────────────────────────┘
                                      │
                                      ▼
┌────────────────────────────────────────────────────────────────────────────┐
│ transmitting the second signal corresponding to the second power output       │  608
│ and/or thermodynamic efficiency                                               │
└────────────────────────────────────┬─────────────────────────────────────────┘
                                      │
                                      ▼
                        ┌──────────┐
                        │   End    │
                        └──────────┘
```

**FIG. 6**

FIG. 7

EP 2 801 102 B1

FIG. 8

EP 2 801 102 B1

**FIG. 9**

FIG. 10

FIG. 11

108

1202

106

104

102

**FIG. 12**

**FIG. 13**

108

1402

102

**FIG. 14**

EP 2 801 102 B1

**FIG. 15**

106
108

102
104

**FIG. 16**

FIG. 17

108

106

1702

104

102

EP 2 801 102 B1

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3254244 A
- US 2009115305 A